# EUROPEAN PATENT APPLICATION

(11) **EP 4 397 705 A1**
(43) Date of publication of application: **10.07.2024**
(21) Application number: 23150589.2
(22) Date of filing: 06.01.2023
(51) Int. Cl.: C08K 9/06, C08K 7/26, C08L 9/06, C08L 9/00, B60C 1/00, C08L 91/00

(54) **RUBBER COMPOSITION WITH BI-FUNCTIONALIZED MESOPOROUS SILICA PARTICLES AS REINFORCEMENT MATERIAL**

(71) Applicant: Luxembourg Institute of Science and Technology (LIST), 4362 Esch-sur-Alzette (LU); The Goodyear Tire & Rubber Company, Akron, OH 44316 (US)
(72) Inventor: THOMANN, Jean Sébastien, L-4362 Esch-sur-Alzette (LU)
(74) Representative: Patent 42

(57) **Abstract**

The present disclosure relates to a rubber composition comprising at least rubber and reinforcement material, wherein the reinforcement material comprises mesoporous silica particles, wherein said mesoporous silica particles comprise an external surface with pores and an internal core comprising channels extending to said pores, the external surface being functionalized with a first type of functional group and the channels having a surface functionalized with a second type of functional group, the first type of functional group being different from the second type of functional group.

## Description

### Field of the Invention

The present disclosure relates to rubber compositions, to tires with a tire tread comprising such rubber compositions and to a process for making such rubber compositions.

### Background of the Invention

For technical application, polymers are almost always combined with fillers to drastically improve their performances, as neat polymer properties are often not enough. For tire rubber reinforcement, silica has been used for decades and since then many advances in this technology have been made. The first and major one has been the use of compatibilizer, predominantly organosilanes, enabling better dispersion and interaction between the mineral polar hydrophilic material silica, and organic hydrophobic polymers matrix of composite materials. Today, many different strategies aiming at rubber reinforcement from fillers have been investigated. Original materials like clays, or graphene oxide have been the topic of extensive research and bring new functionality to composite materials. Other strategies focus on fillers morphology and investigate its effect on the composite properties. When it comes to silica particle morphology, mesoporous structures are a vast area of research. Initially seen as potent molecular sieves, their large specific surface area, the variety of structures, size, and synthesis processes opened the way for all sorts of innovations and applications. Mesoporous silica is used for drug delivery systems, contrast enhancing agent carrier in medical imagery, water depollution, gas separation, column chromatography, or catalysis. More specifically for rubber, porous systems have been used to enhance silicon thermal and optic properties - see study of Suzuki N., et al., entitled "Effective use of mesoporous silica filler: comparative study on thermal stability and transparency of silicone rubbers loaded with various kinds of silica particles" (Eur. J. Inorg. Chem., 2014, 2773-2778) - or as antioxidant release in SBR composites - see study of Luo, Y. et al, entitled "Surface-modified mesoporous silica nanorods for the highly aging resistance rubber through controlled release of antioxidant" (Polym. Adv. Technol., 2021, 32, 3384-3391).

In terms of mechanical reinforcement, the interest in mesoporous silica is driven by the high surface area that leads to strong interaction between the fillers and the polymeric matrix. Indeed, the reinforcing effect of a filler relies on its ability to interact and change the polymer chains dynamic.

The present disclosure has for objective to improve the stability of rubber composition comprising filler. In particular, the present disclosure aims at improving the stability of rubber composition comprising silica particles wherein the risk of dislocation of the rubber composition is avoided or at least reduced.

### Summary of the Invention

According to a **first aspect,** the present disclosure relates to a rubber composition comprising at least rubber and reinforcement material, wherein the reinforcement material comprises mesoporous silica particles, wherein said mesoporous silica particles comprise an external surface with pores and an internal core comprising channels extending to said pores, the external surface being functionalized with a first type of functional group and the channels having a surface functionalized with a second type of functional group, the first type of functional group being different from the second type of functional group.

According to a **second aspect,** the present disclosure relates to a rubber composition comprising at least rubber, one or more hydrocarbon resins, and reinforcement material, the reinforcement material comprises mesoporous silica particles, wherein said mesoporous silica particles comprise an external surface with pores and an internal core comprising channels extending to said pores, the external surface being functionalized with a first type of functional group and the channels having a surface functionalized with a second type of functional group, the first type of functional group being different from the second type of functional group and wherein said rubber composition comprises a total amount of silica ranging between 40 phr and 250 phr. This corresponds to a rubber composition according to the first aspect, and further comprising one or more hydrocarbon resins, and wherein said rubber composition comprises a total amount of silica ranging between 40 phr and 250 phr.

According to a **third aspect,** the present disclosure relates to a tire with a tire tread, wherein the tire tread comprises a rubber composition selected from the rubber composition according to the first aspect, or a rubber composition according to the second aspect, or a mixture of the rubber composition according to the first aspect and the rubber composition according to the second aspect.

According to a **fourth aspect,** the present disclosure relates to a process for making a rubber composition as defined in accordance with the first aspect or for making a rubber composition as defined in accordance with the second aspect, wherein said process comprises the following step:
(a) providing at least rubber and optionally one or more hydrocarbon resins;
(b) providing a first portion of reinforcement material;
(c) mixing at least said rubber and optionally said one or more hydrocarbon resins with said first portion of reinforcement material under first mixing conditions to obtain a first mixture;
(d) providing at least a second portion of reinforcement material;
(e) mixing at least said second portion of reinforcement material with the first mixture obtained at step (c) under second mixing conditions to obtain a second mixture;
(f) providing one or more additives;
(g) mixing said one or more additives with the second mixture obtained at step (e) under third mixing conditions to obtain a third mixture;
(h) curing said third mixture under curing conditions.

It has been surprisingly found that the bi-functionalized mesoporous silica nanoparticles improve the properties of the polymeric matrix with which they form the composite. Their ability to bond with the polymer matrix is considerably enhanced, allowing a better interaction between the fillers and the polymer network formed by the rubber, which subsequently leads to the enhancement of the mechanical reinforcement of such rubber composition. In addition, the use of mesoporous particles is not subjected to irreversible mechanical deformation, unlike small silica particles aggregates of comparable surface, while still endorsing the role of crosslink node and reinforcing agent that is herein also enhanced due to the bi-functionalization. This is reducing the rolling resistance behavior of such composites, whilst providing properties such as traction to tire material.

The following can be used to further define the rubber composition according to the first aspect and the second aspect.

### As regard to the mesoporous silica particles

For example, the mesoporous silica particles show a dendrite morphology with dendrites evidenced by transmission electron microscopy.

For example, the mesoporous silica particles have a diameter size ranging between 10 nm and 250 nm as determined by transmission electron microscopy, or between 30 nm and 200 nm, or between 50 nm and 150 nm.

For example, the pores of the mesoporous silica particles have a diameter ranging between 5 nm and below 30 nm as determined by transmission electron microscopy or between 6 nm and 29 nm, preferably between 7 nm and 28 nm, more preferably between 8 nm and 27 nm, even more preferably between 9 nm and 26 nm, most preferably between 10 nm and 25 nm, or between 11 nm and 25 nm, or between 12 nm and 25 nm, or between 13 nm and 25 nm, or between 14 nm and 25 nm, or between 15 nm and 25 nm. For example, the pores having a diameter ranging between 5 nm and below 30 nm as determined by transmission electron microscopy are a first type of pores, the mesoporous silica particles further comprising a second type of pores having a diameter ranging between 30 nm and 40 nm as determined by transmission electron microscopy, preferably between 31 nm and 39 nm, more preferably between 32 nm and 38 nm, even more preferably between 33 nm and 37 nm.

For example, the mesoporous silica particles of the reinforcement material are a first type of silica, and the reinforcement material further comprises a second type of silica, the second type of silica being different from the first type of silica. With preference, the mesoporous silica particles of the reinforcement material are a first type of silica, and the reinforcement material further comprises a second type of silica being aggregates of silica. More preferably, the aggregates of silica comprise silica nanoparticles and/or wherein the silica nanoparticles have a diameter ranging between 1 nm and 100 nm as determined by scanning transmission electron microscopy, or between 5 nm and 90 nm, or between 10 nm and 80 nm, or between 15 nm and 70 nm. With preference, the aggregates of silica have a size ranging between 50 µm and 350 µm as determined by scanning transmission electron microscopy, or between 60 µm and 340 µm, or between 70 µm and 330 µm, or between 80 µm and 320 µm, or between 90 µm and 310 µm, or between 100 µm and 300 µm. With preference, the second type of silica is in an amount of at least 0.1 phr, or at least 1.0 phr, or at least 5.0 phr, or at least 10.0 phr, or at least 15.0 phr, or at least 20.0 phr, or at least 25.0 phr.

For example, the mesoporous silica particles of the reinforcement material are a first type of silica, and the reinforcement material further comprises a second type of silica having a specific surface area ranging between 150 m²/g and 250 m²/g as determined by BET experiments under ASTM D1993, or between 160 m²/g and 240 m²/g, or between 170 m²/g and 230 m²/g.

For example, said first type of functional group is or comprises one or more alkyl chains and wherein said second type of functional group comprises at least one sulphur atom. With preference, said one or more alkyl chains comprises at most 6 carbon atoms, or at most 5 carbon atoms.

### As regard to the rubber

For example, said rubber is or comprises one or more selected of styrene-butadiene rubber, neodymium polybutadiene rubber, polybutadiene rubber, cis-polybutadiene rubber, polyisoprene rubber, styrene-isoprene rubber, styrene-isoprene-butadiene rubber, ethylene propylene rubber, ethylene propylene diene monomer/butyl rubber, copolymers or blends of any of previously-mentioned rubber.

For example, said rubber is or comprises styrene-butadiene rubber. With preference, said styrene-butadiene rubber has a glass transition temperature ranging between -50°C and -85°C as determined by differential scanning calorimeter, or ranging between -55°C and - 80°C, or ranging between -60°C and -75°C.

For example, said rubber is or comprises styrene-butadiene rubber, and said rubber further comprises at least one polybutadiene rubber.

For example, the rubber composition further comprises at least one polybutadiene rubber having a glass transition temperature which is ranging between -85°C to -115°C as determined by differential scanning calorimeter.

With preference, the content of the at least one polybutadiene rubber in said rubber composition is less than 40 phr, or less than 30 phr. For example, the content of said at least one polybutadiene rubber in said rubber composition is ranging between 5 phr and 40 phr, or between 10 phr and 30 phr.

For example, the weight average molecular weight of said at least rubber is ranging between 200,000 g/mol and 1,500,000 g/mol determined by GPC according to ASTM D5296-11, or between 250,000 g/mol and 1,400,000 g/mol, or between 300,000 g/mol and 1,300,000 g/mol, or between 350,000 g/mol and 1,200,000 g/mol, or between 400,000 g/mol and 1,100,000 g/mol, or between 450,000 g/mol and 1,000,000 g/mol.

### As regard to the one or more hydrocarbon resins if present in the rubber composition

For example, the one or more hydrocarbon resins are selected from terpene resins, coumarone-indene resins, petroleum resins, a-methyl styrene resins, preferably from terpene resins.

For example, said one or more hydrocarbons resins have a glass transition temperature of at least 30°C as determined by differential scanning calorimeter, preferably of at least 40°C, more preferably of at least 50°C, even more preferably of at least 60°C, and optionally lower than 100°C.

For example, said one or more hydrocarbon resins have a glass transition temperature ranging between 30°C and 100°C as determined by differential scanning calorimeter, or between 40°C and 90°C, or between 50°C and 80°C, or between 60°C and 80°C.

For example, the rubber composition further comprises from 15 phr to 80 phr of one or more hydrocarbon resins, or from 15 phr to 75 phr, or from 15 phr to 70 phr, or from 15 phr to 65 phr, or from 15 phr to 60 phr, or from 15 phr to 55 phr, or from 15 phr to 50 phr, or from 15 phr to 45 phr, or from 15 phr to 40 phr, or from 15 phr to 35 phr.

For example, said rubber composition further comprises from 15 phr to 70 phr, or from 15 phr to 40 phr of at least one hydrocarbon resin having a glass transition temperature ranging between 30°C and 100°C as determined by differential scanning calorimeter, or ranging between 30°C and 80°C.

For example, the rubber composition further comprises one or more hydrocarbon resins and one or more process oils, and the sum of the amount of said one or more hydrocarbon resins and the amount of said one or more process oils is ranging between 35 phr and 85 phr, or between 40 phr and 80 phr, or between 45 phr and 75 phr.

### As regard to the rubber composition itself

For example, said rubber composition further comprises one or more process oils selected from treated distillate aromatic extracts, mild extracted solvate or treated residual aromatic extracts.

For example, said rubber composition further comprises one or more process oils present in a content ranging from 1 phr to 50 phr, or from 2 phr to 30 phr, or from 3 phr to 25 phr, or from 4 phr to 20 phr, or from 5 phr to 20 phr.

For example, said rubber composition further comprises one or more process oils, and the phr ratio between the reinforcement material and the one or more process oils is ranging between 3.5:1 and 8:1, or between 4:1 and 7.5:1, or between 4.5:1 and 7:1.

With preference, said styrene-butadiene rubber has a glass transition temperature ranging between -50°C and -85°C as determined by differential scanning calorimeter and the rubber composition further comprises from 15 phr to 40 phr of at least one hydrocarbon resin, from 5 phr to 25 phr of one or more process oils, and the sum of the amount of said at least one hydrocarbon resin and the amount of the one or more process oils is ranging between 35 phr and 50 phr.

With preference, said rubber composition comprises a total amount of silica ranging between 40 phr and 250 phr, or between 40 phr and 200 phr, or between 75 phr and 105 phr, or, between 80 phr and 100 phr, or between 90 phr and 100 phr.

For example, said rubber composition is sulphur cured.

For example, said rubber composition further comprises one or more process oils, and wherein the phr ratio between the reinforcement material and the one or more process oils is ranging between 3.5:1 and 8:1, and wherein the weight average molecular weight of said at least rubber is ranging between 400,000 g/mol and 1,000,000 g/mol determined by GPC according to ASTM D5296-11.

For example, said rubber composition further comprises one or more process oils, and wherein the weight average molecular weight of said at least rubber is ranging between 400,000 g/mol and 1,000,000 g/mol determined by GPC according to ASTM D5296-11.

With preference, said rubber composition further comprises from 15 phr to 40 phr of at least one hydrocarbon resin having a glass transition temperature ranging between 30°C and 100°C.

### As regard to the process according to the fourth aspect of the disclosure

For example, the first portion of reinforcement material represents from 50 wt.% to 80 wt.% of the total weight of the first and second portion of reinforcement material, preferably from 55 wt.% to 75 wt.%, more preferably from 60 wt.% to 70 wt.%.

For example, the second portion of reinforcement material is or comprises mesoporous silica particles. With preference, the mesoporous silica particles are a first type of silica, and the second portion of reinforcement material further comprises a second type of silica, more preferably the second type of silica is aggregates of silica. With preference, the second type of silica is in an amount of at least 0.1 phr, or at least 1.0 phr, or at least 5.0 phr, or at least 10.0 phr, or at least 15.0 phr, or at least 20.0 phr, or at least 25.0 phr.

For example, the first mixing conditions and/or the second mixing conditions comprise a mixing temperature ranging between 70°C and 90°C, or between 75°C and 85°C.

For example, the first mixing conditions and/or the second mixing conditions comprise a mixing time ranging between 5 minutes and 15 minutes, or between 7 minutes and 13 minutes.

For example, the third mixing conditions comprise a mixing temperature ranging between 50°C and 70°C, or between 55°C and 65°C.

For example, the third mixing conditions comprise a mixing time ranging between 1 minute and 3 minutes.

For example, the curing conditions comprise a curing temperature ranging between 150°C and 190°C, or between 160°C and 180°C.

For example, the curing conditions comprise a curing time ranging between 8 minutes and 12 minutes, or between 9 minutes and 11 minutes.

For example, the curing conditions comprise a curing pressure ranging between 125 kPa and 175 kPa, or between 130 kPa and 170 kPa.

For example, each of the first mixture and/or of the second mixture is further mixed in a roll-mill before respectively step (e) and step (g). With preference, said additional mixing step is carried out at a temperature ranging between 40°C and 60°C, or between 45°C and 55°C, and/or said additional mixing step is carried out at least 5 times, or at least 6 times.

For example, the step (a) further comprises the step of providing one or more activators and/or one or more performance modifier additives. With preference, said one or more activators are selected from zinc oxide, stearic acid, lauric acid, palmitic acid, oleic acid, naphthenic acid, or any mixture thereof, more preferably from a mixture of zinc oxide and stearic acid. With preference, a performance modifier additive is RO PR383.

For example, the step (d) further comprises the step of providing one or more compounds selected from silane and/or one or more antioxidants. With preference, said one or more antioxidants are selected from 6PPD, (*i.e.*, *N*-(1,3-dimethylbutyl)-*N*'-phenyl-*p-*phenylenediamine), 2,2,4-trimethyl-1,2-dihydroquinoline, any alkylated diphenylamines, any compounds referenced as antidegradants according to ASTM D4676, or any mixture thereof, more preferably 6PPD.

For example, the one or more additives provided at step (f) are selected from one or more vulcanization agents and/or one or more rubber cure accelerators. With preference, the one or more vulcanization agents are selected from sulphur (*e.g.*, rhombic sulphur), tetramethylthiuram disulfide, *N*-oxydiethylene-*N*'-oxydiethylenethiocarbamylsulfonamide, dipentamethylenethiuramtetrasulfide, 2-morpholinodithiobenzothiazole, alkyl phenol disulfide, or any mixture thereof, preferably rhombic sulphur. With preference, the one or more rubber cure accelerators are selected from 2-mercaptobenzothiazole (MBT), di-phenylguanidine (DPG), *N*-cyclohexyl-2-benzothiazolesulfenamide (CBS), diphenyl guanidine, dithiocarbamate/xanthates, or any mixture thereof, more preferably from a mixture of 2-mercaptobenzothiazole, di-phenylguanidine and *N*-cyclohexyl-2-benzothiazolesulfenamide.

### Definitions

The term "phr" as used herein, and according to conventional practice, refers to parts by weight of a respective material per 100 parts by weight of rubber, or elastomer. In general, using this convention a rubber composition is comprised of 100 parts by weight of the rubber/elastomer. Therefore, the value of "phr" and "wt.%" are different. For example, when 10 g of additives are added to 100 g of rubber, the content of additives is 9.1 wt.% and 10 phr.

A reference to a glass transition temperature, or T_{g}, of an elastomer or elastomer composition, where referred to herein, represents the glass transition temperature of the respective elastomer or elastomer composition in its uncured state. T_{g} is defined as the temperature at or above which the large segmental mobility of the polymer main chain starts. A T_{g} is determined as a peak midpoint by a differential scanning calorimeter (DSC) at a temperature rate of increase of 10°C per minute, according to ASTM D3418.

The term *"cis"* in the expression "*cis*-polybutadiene rubber" refers to the spatial arrangement of chemical moieties with respect to a plane, wherein said chemical moieties are on the same side, by opposition to the *"trans"* term. It is relatively difficult to separate the *cis* isomer from the *trans* isomer, so that *cis-trans* mixture is often available rather than the single isomer. When referring to the *cis* isomer, such as in the expression "*cis*-polybutadiene rubber", it means that the *cis-trans* mixture comprises at least 90 wt.% of the *cis* isomer based on the total weight of said *cis-trans* mixture, preferably at least 95 wt.% or more preferably at least 99 wt.%, or even more preferably 100 wt.%.

### Brief Description of the Drawings

The invention will be described by way of example and with reference to the accompanying drawings in which:
Figure 1 is a representation of the synthesis of the RMDS.
Figure 2 is a transmission electron microscope (TEM) image of the RMDS particles.
Figure 3 is a TEM image of the RMDS particles.
Figure 4 displays the thermogravimetric analysis (TGA) and the differential thermogravimentric analysis (dTGA) curves of the RMDS particles.
Figure 5 shows the TGA data of unmodified stellate silica and of mercapto-functionalized (stellate-SH) in comparison with TGA data of RMDS particles.
Figure 6 shows the dTGA data of unmodified stellate silica and of mercapto-functionalized (stellate-SH) in comparison with dTGA of RMDS particles.
Figure 7 is the ²⁹Si solid state NMR of the RMDS particles.
Figure 8 shows the DFT pore size calculation from nitrogen adsorption porosimetry analysis of RMDS particles.
Figure 9 shows a scanning transmission electron microscopy (STEM) bright field (BF) images of the RMDS particles.
Figure 10 is an energy dispersive X-Ray spectroscopy (EDS) image of the RMDS particles.
Figure 11 is a STEM image of HDS 200MP silica particles with a scale of 5 µm.
Figure 12 is a STEM image of HDS 200MP silica particles with a scale of 400 nm.
Figure 13 is a STEM image of a rubber composition with HDS 200MP silica particles as reinforcement material with a scale of 3 µm.
Figure 14 is a STEM image of a rubber composition with HDS 200MP silica particles as reinforcement material with a scale of 500 nm.
Figure 15 represents the stress in function of the strain of the different rubber compositions comprising fillers.
Figure 16 is representation of the strain at break and the stress at break of the different rubber compositions comprising fillers.
Figure 17 shows the evolution of maximum strength under cyclic tensile test of the different rubber compositions comprising fillers.
Figure 18 shows the reinforcing index of the different rubber compositions comprising fillers calculated as a ratio of the modulus at 150% strain by the modulus at 50% strain.
Figure 19 shows the tan d curves at 1 Hz of the different rubber compositions comprising fillers.
Figure 20 shows the tan d at 0°C (wet grip) and 60°C (rolling resistance) of the different rubber compositions relative to the rubber composition **(3)** comprising fractal precipitated silica such as HDS 200 MP, at 80 phr.
Figure 21 represents the storage modulus E' versus strain of the different rubber compositions comprising fillers.
Figure 22 shows the Payne effect through decrease of storage modulus, measured at 10 Hz, of the different rubber compositions comprising fillers.
Figure 23 shows the STEM images of the rubber compositions **(1)** (on the left) and **(2)** (on the right) at two different scales in bright field mode.
Figure 24 shows the STEM images of the rubber compositions **(4)** (on the left) and **(5)** (on the right) at two different scales in bright field mode.
Figure 25 is the STEM image of the rubber composition comprising a reinforcement material made of 90 phr of RMDS particles and 10 phr of HDS 200 MP particles, at a scale of 3 µm.
Figure 26 is the STEM image of the rubber composition comprising a reinforcement material made of 90 phr of RMDS particles and 10 phr of HDS 200 MP particles, at a scale of 500 nm.
Figure 27 represent the maxim torque (left bars) and the temperature (right bars) of the mixing step (e). The torque is normalized with respect to the rubber composite having fractal precipitated silica such as HDS 200 MP, at 80 phr, as fillers **(3).**
Figure 28 represents the stress in function of the strain of the different rubber compositions comprising fillers based on RMDS silica.
Figure 29 is representation of the strain at break and the stress at break of the different rubber compositions comprising fillers based on RMDS silica.
Figure 30 shows the evolution of maximum strength under cyclic tensile test of the different rubber compositions comprising fillers based on RMDS silica.
Figure 31 shows the reinforcing index of the different rubber compositions comprising fillers based on RMDS silica.
Figure 32 is the STEM image of the rubber composition **(8).**
Figure 33 is the STEM image of the rubber composition **(9).**
Figure 34 is the STEM image of the rubber composition **(10).**
Figure 35 shows the tan d curves at 1 Hz of the different rubber compositions comprising fillers based on RMDS silica.
Figure 36 shows the tan d at 0°C (wet grip) and 60°C (rolling resistance) of the different rubber compositions comprising fillers based on RMDS silica relative to the rubber composition **(3)** comprising fractal precipitated silica such as HDS 200 MP, at 80 phr.
Figure 37 represents the storage modulus E' versus strain of the different rubber compositions comprising fillers based on RMDS silica.
Figure 38 shows the Payne effect through decrease of storage modulus, measured at 10 Hz, of the different rubber compositions comprising fillers based on RMDS silica.
Figure 39 represents the storage modulus in function of the temperature of the different rubber compositions measured by dynamic mechanical analysis at 1 Hz.
Figure 40 represents the storage modulus measured at 30°C measured by dynamic mechanical analysis at 1 Hz.
Figure 41 is a schematic of silica-polymer interaction during mechanical deformation.

### Detailed Description of the Invention

The present disclosure relates to a rubber composition comprising at least rubber and reinforcement material, wherein the reinforcement material comprises mesoporous silica particles, wherein said mesoporous silica particles comprise an external surface with pores and an internal core comprising channels extending to said pores, the external surface being functionalized with a first type of functional group and the channels having a surface functionalized with a second type of functional group, the first type of functional group being different from the second type of functional group.

The bi-functionalized mesoporous silica nanoparticles improve the properties of the polymeric matrix with which they form the composite. The porosity provides a high surface of interaction due to the permeation of the polymer inside it, increasing therefore the bonding between the rubber and the fillers. This interaction is further increased thanks to the biofunctionalization of the reinforcement material. This leads to rubber composition in which the risk of dislocation is considerably decreased or avoided.

The rubber composition of the present disclosure can also be defined as comprising at least rubber, one or more hydrocarbon resins, and reinforcement material, the reinforcement material comprises mesoporous silica particles, wherein said mesoporous silica particles comprise an external surface with pores and an internal core comprising channels extending to said pores, the external surface being functionalized with a first type of functional group and the channels presenting a surface functionalized with a second type of functional group, the first type of functional group being different from the second type of functional group and wherein said rubber composition comprises a total amount of silica ranging between 40 phr and 250 phr.

For example, said first type of functional group is or comprises one or more alkyl chains and wherein said second type of functional group comprises at least one sulphur atom. With preference, said one or more alkyl chains comprises at most 6 carbon atoms, or at most 5 carbon atoms. Indeed, alkyl chains bigger than 6 carbon atoms, render the mesoporous silica particles too waxy and are therefore less suitable for being used in rubber composition.

A unique regio-selective silanization of dendritic mesoporous silica particles has thus been achieved, where a mercaptosilane is co-condensed in the frame of the silica during the particle growth, and an alkylsilane (not too waxy) is grafted on the periphery of the particles by preventing it to access the pores with the soft template already in place. The regioselective silanization of the mesoporous particles was confirmed via their direct elemental mapping with the help of a Helium Ion beam Microscope (HIM) coupled with a Secondary Ion Mass Spectroscopy (SIMS). After incorporation into an SBR-BR rubber matrix and characterization of its mechanical properties, this newly synthesized filler was compared to a fractal commercial filler used in an industrial tire tread compound. RMDS unique design allows it to provide reinforcement with better fatigue resistance and rolling resistance of tire tread rubber composites. This is achieved by the possibility of the polymer to permeate in the mesopores and impossibility for the particles to dislocates, unlike fractal filler aggregates, as shown by the low hysteresis and Payne effect of RMDS compounds. However, the excellent dispersibility of the filler, its size, and its spherical shape prevent sufficient rubber reinforcement to reach the performance level of HDS 200MP.

### The mesoporous silica particles

For example, the mesoporous silica particles show a dendrite morphology with dendrites evidenced by transmission electron microscopy. The particular dendritic morphology of the bi-functionalized mesoporous silica particles allows them to disperse very well into a polymer composite, such as a rubber composition. The multiple branching level of the dendrite morphology allows the presence of internal cavities allowing the rubber polymer to accommodate within the silica particle.

For example, the mesoporous silica particles have a diameter size ranging between 10 nm and 250 nm as determined by transmission electron microscopy, or between 30 nm and 200 nm, or between 50 nm and 150 nm.

For example, the pores of the mesoporous silica particles have a diameter ranging between 5 nm and below 30 nm as determined by transmission electron microscopy or between 6 nm and 29 nm, preferably between 7 nm and 28 nm, more preferably between 8 nm and 27 nm, even more preferably between 9 nm and 26 nm, most preferably between 10 nm and 25 nm, or between 11 nm and 25 nm, or between 12 nm and 25 nm, or between 13 nm and 25 nm, or between 14 nm and 25 nm, or between 15 nm and 25 nm.

For example, the pores of the mesoporous silica particles have a diameter ranging between 2 nm and below 30 nm as determined by transmission electron microscopy, and at least 80% of the pores of the mesoporous silica particles have a diameter ranging between 5 nm and below 30 nm as determined by transmission electron microscopy, preferably at least 85%, more preferably at least 90%, even more preferably at least 95%, most preferably at least 99%, even most preferably 100% of the pores of the mesoporous silica particles have a diameter ranging between 5 nm and below 30 nm as determined by transmission electron microscopy.

The polydisperse distribution allows the polymers to permeate within the rather large mesopores, conferring therefore stability to the polymer composite. The pores having a diameter ranging between 2 nm, or 5 nm, and below 30 nm as determined by transmission electron microscopy are a first type of pores, the mesoporous silica particles advantageously further comprising a second type of pores having a diameter ranging between 30 nm and 40 nm as determined by transmission electron microscopy, preferably between 31 nm and 39 nm, more preferably between 32 nm and 38 nm, even more preferably between 33 nm and 37 nm.

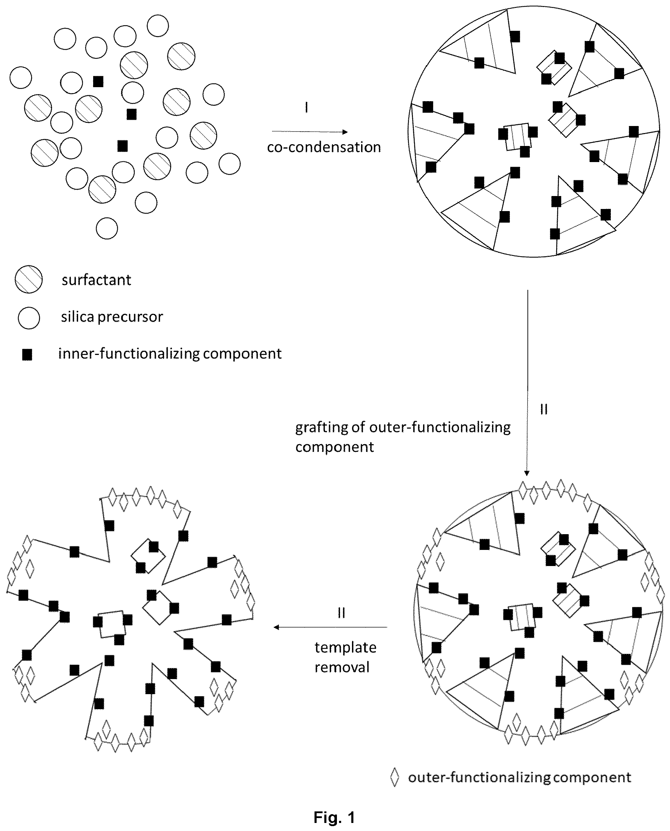

The bi-functionalized mesoporous silica particles are synthesized according to the process schematized in **figure 1****.** In a first stage of the process (I), there is a co-condensation between at least one surfactant, one or more silica precursors and one or more inner-functionalizing components. Mercapto compounds, such as 3-mercaptopropyltriethoxysilane, can act as an inner-functionalizing compounds. The co-condensation results in mesoporous silica particles, the pores of which being filled with the one or more surfactants. The second type of functional group that is then grafted to the surface of the channels of the internal core of the silica particles comprises therefore at least one sulphur atom. Then, in a second stage of the process (II), there is the grafting of the one or more outer-functionalizing components, such as silane compounds having one or more alkyl chains with at most 6 carbon atoms, or at most 5 carbon atoms. This leads respectively to a first type of functional group being grafted on the external surface of the silica particle, wherein the functional groups of the first type is one or more alkyl chains. The process is preferably carried out at a temperature ranging between 70°C and 90°C, preferably between 75°C and 85°C. The final stage of the process (III) comprises the removal of the surfactant, which acted as a template for the formation of the silica particles, and notably its morphology. For example, this step is performed using a Soxhlet extractor, meaning that the extraction is carried out under reflux.

The choice of the surfactant is of paramount importance since it is selected to confer the dendrite morphology to the silica particles. Such surfactants capable of conferring a dendrite morphology can be cationic surfactant capable of forming wormlike micelles (WLMs). For example, a suitable surfactant is selected from hexadecyltrimethylammonium *p-*toluene sulfonate (CTATos), a mixture of erucyl bis(hydroxyethyl) methyl ammonium chloride (EHAC) and sodium tosylate, or a mixture of erucyl bis(hydroxyethyl) methyl ammonium chloride (EHAC) and sodium salicylate, preferably hexadecyltrimethylammonium p-toluene sulfonate (CTATos).

Optionally, the process further comprises a step of washing the mesoporous silica particles with an organic solvent, for example, ethanol, preferably followed by a step of drying said mesoporous silica particles.

For example, the mesoporous silica particles show a total internal pore volume ranging between 1 cm³/g and 2 cm³/g as determined by nitrogen adsorption porosimetry analysis, preferably ranging between 1.1 cm³/g and 1.9 cm³/g, more preferably between 1.2 cm³/g and 1.8 cm³/g, even more preferably between 1.3 cm³/g and 1.7 cm³/g.

For example, said mesoporous silica particles have a specific surface area ranging between 250 m²/g and 500 m²/g as determined by nitrogen adsorption porosimetry analysis, or between 250 m²/g and 450 m²/g, preferably between 275 m²/g and 425 m²/g, more preferably between 300 m²/g and 400 m²/g, even more preferably between 325 m²/g and 375 m²/g.

For example, the first type and/or the second type of functional groups are covalently bonded respectively to the external surface and the surface of the channels, as determined by ²⁹Si solid state nuclear magnetic resonance.

It was further noted that the bi-functionalized mesoporous silica particles of the present disclosure can behave better, notably in terms of stability, when a percolation network is provided. The percolation network is provided when aggregates of silica are arranged between the mesoporous silica particles

### The percolation network

In the rubber composition, adding a small amount of fractal fillers, such as aggregates of silica, fills the gaps between RMDS particles. This creates a percolation network, and increases the filler-filler interaction. This dual-filler system offers better properties in terms of reinforcement, fatigue resistance, wet traction and rolling resistance indicators.

In view of that, the mesoporous silica particles of the reinforcement material are a first type of silica, and the reinforcement material further comprises a second type of silica, the second type of silica being different from the first type of silica, preferably aggregates of silica. Such second type of silica comprised within the reinforcement material forms a percolation network, which is in fact a filler network within the rubber composition.

This percolation network transmits stresses and traps rubber in between mesoporous silica particles that constitute the first type of silica.

More preferably, the aggregates of silica comprise silica nanoparticles and wherein the silica nanoparticles have a diameter ranging between 1 nm and 100 nm as determined by scanning transmission electron microscopy, or between 5 nm and 90 nm, or between 10 nm and 80 nm, or between 15 nm and 70 nm. With preference, the aggregates of silica have a size ranging between 50 µm and 350 µm as determined by scanning transmission electron microscopy, or between 60 µm and 340 µm, or between 70 µm and 330 µm, or between 80 µm and 320 µm, or between 90 µm and 310 µm, or between 100 µm and 300 µm. With preference, the second type of silica is in an amount of at least 0.1 phr, or at least 1.0 phr, or at least 5.0 phr, or at least 10.0 phr, or at least 15.0 phr, or at least 20.0 phr, or at least 25.0 phr.

For example, the mesoporous silica particles of the reinforcement material are a first type of silica, and the reinforcement material further comprises a second type of silica having a specific surface area ranging between 150 m²/g and 250 m²/g as determined by BET experiments under ASTM D1993, or between 160 m²/g and 240 m²/g, or between 170 m²/g and 230 m²/g.

The second type of silica, forming the percolation network, is for example added during the process for making the rubber compositions, in a second stage.

### The rubber

For example, said rubber is a non-polar rubber.

With preference, said rubber is or comprises one or more selected of styrene-butadiene rubber, neodymium polybutadiene rubber, polybutadiene rubber, cis-polybutadiene rubber, polyisoprene rubber, styrene-isoprene rubber, styrene-isoprene-butadiene rubber, ethylene propylene rubber, ethylene propylene diene monomer/butyl rubber, copolymers or blends of any of previously-mentioned rubber.

For example, said rubber is or comprises styrene-butadiene rubber. With preference, said styrene-butadiene rubber has a glass transition temperature ranging between -50°C and -85°C as determined by differential scanning calorimeter, or ranging between -55°C and -80°C, or ranging between -60°C and -75°C.

For example, said rubber is or comprises styrene-butadiene rubber, and said rubber further comprises at least one polybutadiene rubber.

For example, the rubber composition further comprises at least one polybutadiene rubber having a glass transition temperature which is ranging between -85°C to -115°C as determined by differential scanning calorimeter.

With preference, the content of the at least one polybutadiene rubber in said rubber composition is less than 40 phr, or less than 30 phr. For example, the content of said at least one polybutadiene rubber in said rubber composition is ranging between 5 phr and 40 phr, or between 10 phr and 30 phr.

For example, said rubber is or comprises styrene-butadiene rubber and said styrene-butadiene rubber has a styrene microstructure content within a range of 5 wt.% to 40 wt.% based on the total weight of the styrene-butadiene rubber, or within a range of 10 wt.% to 35 wt.%, or of 15 wt.% to 30 wt.%; and a vinyl microstructure content within a range of 30 wt.% to 70 wt.% based on the total weight of the styrene-butadiene rubber, or within a range of 35 wt.% to 65 wt.%, or of 40 wt.% to 65 wt.%

For example, the weight average molecular weight of said at least rubber is ranging between 200,000 g/mol and 1,500,000 g/mol determined by GPC according to ASTM D5296-11, or between 250,000 g/mol and 1,400,000 g/mol, or between 300,000 g/mol and 1,300,000 g/mol, or between 350,000 g/mol and 1,200,000 g/mol, or between 400,000 g/mol and 1,100,000 g/mol, or between 450,000 g/mol and 1,000,000 g/mol.

### The one or more hydrocarbon resins if present in the rubber composition

Hydrocarbon resins are used in the rubber technology as processing aids, tackifiers, curing agents, and reinforcing agents. Such resins have been used to lower viscosity, enhance tackiness and green strength of uncured compounds as well as to improve mechanical properties of the vulcanizates. Tack is the ability of two materials to resist separation after bringing the surfaces into contact for a short time under light pressure. It is therefore interesting to incorporate such hydrocarbon resins into the rubber composition of the present disclosure.

For example, the one or more hydrocarbon resins are selected from terpene resins, coumarone-indene resins, petroleum resins, a-methyl styrene resins, preferably from terpene resins.

For example, said one or more hydrocarbons resins have a glass transition temperature of at least 30°C as determined by differential scanning calorimeter, preferably of at least 40°C, more preferably of at least 50°C, even more preferably of at least 60°C, and optionally lower than 100°C.

For example, said one or more hydrocarbon resins have a glass transition temperature ranging between 30°C and 100°C as determined by differential scanning calorimeter, or between 40°C and 90°C, or between 50°C and 80°C, or between 60°C and 80°C.

For example, the rubber composition further comprises from 15 phr to 80 phr of one or more hydrocarbon resins, or from 15 phr to 75 phr, or from 15 phr to 70 phr, or from 15 phr to 65 phr, or from 15 phr to 60 phr, or from 15 phr to 55 phr, or from 15 phr to 50 phr, or from 15 phr to 45 phr, or from 15 phr to 40 phr, or from 15 phr to 35 phr.

For example, said rubber composition further comprises from 15 phr to 70 phr, or from 15 phr to 40 phr of at least one hydrocarbon resin having a glass transition temperature (T_{g}) ranging between 30°C and 100°C as determined by differential scanning calorimeter, or ranging between 30°C and 80°C. In particular, such a relatively high resin T_{g} is considered to be beneficial for wet grip, with limited impact on rolling resistance.

For example, the rubber composition further comprises one or more hydrocarbon resins and one or more process oils, and the sum of the amount of said one or more hydrocarbon resins and the amount of said one or more process oils is ranging between 35 phr and 85 phr, or between 40 phr and 80 phr, or between 45 phr and 75 phr.

### The rubber composition itself

For example, said rubber composition further comprises one or more process oils selected from treated distillate aromatic extracts, mild extracted solvate or treated residual aromatic extracts.

For example, said rubber composition further comprises one or more process oils present in a content ranging from 1 phr to 50 phr, or from 2 phr to 30 phr, or from 3 phr to 25 phr, or from 4 phr to 20 phr, or from 5 phr to 20 phr.

For example, said rubber composition further comprises one or more process oils, and the phr ratio between the reinforcement material and the one or more process oils is ranging between 3.5:1 and 8:1, or between 4:1 and 7.5:1, or between 4.5:1 and 7:1.

With preference, said styrene-butadiene rubber has a glass transition temperature ranging between -50°C and -85°C as determined by differential scanning calorimeter and the rubber composition further comprises from 15 phr to 40 phr of at least one hydrocarbon resin, from 5 phr to 25 phr of one or more process oils, and the sum of the amount of said at least one hydrocarbon resin and the amount of the one or more process oils is ranging between 35 phr and 50 phr. This composition supports an advanced balance between rolling resistance/snow performance and wet performance/treadwear.

With preference, said rubber composition comprises a total amount of silica ranging between 40 phr and 250 phr, or between 40 phr and 200 phr, or between 75 phr and 105 phr, or, between 80 phr and 100 phr, or between 90 phr and 100 phr.

For example, said rubber composition is sulphur cured.

For example, said rubber composition further comprises one or more process oils, and wherein the phr ratio between the reinforcement material and the one or more process oils is ranging between 3.5:1 and 8:1, and wherein the weight average molecular weight of said at least rubber is ranging between 400,000 g/mol and 1,000,000 g/mol determined by GPC according to ASTM D5296-11. This combination of relatively high filler to oil ratio with said limited weight average molecular weight of the rubber, especially styrene-butadiene rubber, helps to provide a good rolling resistance of the composition.

The present disclosure further relates to a tire with a tire tread, wherein the tire tread comprises any one of the rubber compositions as described above.

### Process for making a rubber composition as described above

The process comprises the following step:
(a) providing at least rubber and optionally one or more hydrocarbon resins;
(b) providing a first portion of reinforcement material;
(c) mixing at least said rubber and optionally said one or more hydrocarbon resins with said first portion of reinforcement material under first mixing conditions to obtain a first mixture;
(d) providing at least a second portion of reinforcement material;
(e) mixing at least said second portion of reinforcement material with the first mixture obtained at step (c) under second mixing conditions to obtain a second mixture;
(f) providing one or more additives;
(g) mixing said one or more additives with the second mixture obtained at step (e) under third mixing conditions to obtain a third mixture;
(h) curing said third mixture under curing conditions.

For example, the first portion of reinforcement material represents from 50 wt.% to 80 wt.% of the total weight of the first and second portion of reinforcement material, preferably from 55 wt.% to 75 wt.%, more preferably from 60 wt.% to 70 wt.%.

For example, the second portion of reinforcement material is or comprises mesoporous silica particles. With preference, the mesoporous silica particles are a first type of silica, and the second portion of reinforcement material further comprises a second type of silica, more preferably the second type of silica is aggregates of silica. With preference, the second type of silica is in an amount of at least 0.1 phr, or at least 1.0 phr, or at least 5.0 phr, or at least 10.0 phr, or at least 15.0 phr, or at least 20.0 phr, or at least 25.0 phr.

For example, the first mixing conditions and/or the second mixing conditions comprise a mixing temperature ranging between 70°C and 90°C, or between 75°C and 85°C.

For example, the first mixing conditions and/or the second mixing conditions comprise a mixing time ranging between 5 minutes and 15 minutes, or between 7 minutes and 13 minutes.

For example, the third mixing conditions comprise a mixing temperature ranging between 50°C and 70°C, or between 55°C and 65°C.

For example, the third mixing conditions comprise a mixing time ranging between 1 minute and 3 minutes.

For example, the curing conditions comprise a curing temperature ranging between 150°C and 190°C, or between 160°C and 180°C.

For example, the curing conditions comprise a curing time ranging between 8 minutes and 12 minutes, or between 9 minutes and 11 minutes.

For example, the curing conditions comprise a curing pressure ranging between 125 kPa and 175 kPa, or between 130 kPa and 170 kPa.

For example, each of the first mixture and/or of the second mixture is further mixed in a roll-mill before respectively step (e) and step (g). With preference, said additional mixing step is carried out at a temperature ranging between 40°C and 60°C, or between 45°C and 55°C, and/or said additional mixing step is carried out at least 5 times, or at least 6 times.

For example, the step (a) further comprises the step of providing one or more activators and/or one or more performance modifier additives. With preference, said one or more activators are selected from zinc oxide, stearic acid, lauric acid, palmitic acid, oleic acid, naphthenic acid, or any mixture thereof, more preferably from a mixture of zinc oxide and stearic acid. With preference, a performance modifier additive is RO PR383.

For example, the step (d) further comprises the step of providing one or more compounds selected from silane and/or one or more antioxidants. With preference, said one or more antioxidants are selected from 6PPD, (*i.e*., *N*-(1,3-dimethylbutyl)-*N*'-phenyl-p-phenylenediamine), 2,2,4-trimethyl-1,2-dihydroquinoline, any alkylated diphenylamines, any compounds referenced as antidegradants according to ASTM D4676, or any mixture thereof, more preferably 6PPD.

For example, the one or more additives provided at step (f) are selected from one or more vulcanization agents and/or one or more rubber cure accelerators. With preference, the one or more vulcanization agents are selected from sulphur (*e.g*., rhombic sulphur), tetramethylthiuram disulfide, *N*-oxydiethylene-*N*'-oxydiethylenethiocarbamylsulfonamide, dipentamethylenethiuramtetrasulfide, 2-morpholinodithiobenzothiazole, alkyl phenol disulfide, or any mixture thereof, preferably rhombic sulphur. With preference, the one or more rubber cure accelerators are selected from 2-mercaptobenzothiazole (MBT), di-phenylguanidine (DPG), N-cyclohexyl-2-benzothiazolesulfenamide (CBS), diphenyl guanidine, dithiocarbamate/xanthates, or any mixture thereof, more preferably from a mixture of 2-mercaptobenzothiazole, di-phenylguanidine and N-cyclohexyl-2-benzothiazolesulfenamide.

### Test and determination methods

### (Scanning) Transmission electron microscopy (S)TEM

(Scanning) Transmission electron microscopy (S)TEM investigations were carried out using a JEM - ARM 200F Cold FEG TEM/STEM operating at 200 kV and equipped with a spherical aberration (Cs) probe and image correctors (point resolution 0.12 nm in TEM mode and 0.078 nm in STEM mode).

### Energy Dispersive X-Rays Spectroscopy (EDS)

Energy Dispersive X-rays Spectroscopy (EDS) analyses were performed in STEM mode on the JEM - ARM 200F Cold FEG TEM/STEM operating at 200 kV with a diameter of the probe of 1 nm, using Centurio Silicon Drift Detector (SDD) that collects X-rays from sample at large solid angle of up to 0.98 steradians from a detection area of 100 mm². The composition quantification of the collected X-ray spectra was performed using the Cliff-Lorimer method by dedicated software from Jeol.

### Nitrogen adsorption porosimetry

The specific surface area and pore volume of mesoporous silica particles have been determined by the Barrett-Joyner-Halenda (BJH) method using an Autosorb-IQ-MP/XR analyser from the Quantachrome Instruments company (Boynton Beach, Florida, USA). Before performing nitrogen sorption measurement, the sample was degassed at 100°C for 8h. Pores volumes were estimated using the Density Functional Theory (DFT) method.

### Solid-state ²⁹Si MAS (Magic Angle Spinning) NMR of regio-selectively functionalized mesoporous silica

Solid-state ²⁹Si MAS (Magic Angle Spinning) NMR spectra were acquired on a Bruker Avance 400MHz spectrometer (9.4 T wide bore magnet) equipped with a 4 mm BL4 X/Y/H probe. Magic angle spinning was performed at 6.5 kHz using ceramic zirconia rotors of 4 mm in diameter. The signal of talc was used to calibrate the silicon chemical shift scale (-98 ppm). Acquisition parameters used were the following: a spectral width of 300 ppm, a 90° pulse length of 4.5 µs, an acquisition time of 15ms, a recycle delay time of 60 s and about 3000 accumulations (48 hrs.). High power proton dipolar decoupling during the acquisition time was set to 70 kHz. Solid-state ²⁹Si MAS (Magic Angle Spinning) NMR spectra were also acquired on an Agilent VNMRS Direct Drive 400 MHz spectrometer (9.4 T wide bore magnet) equipped with a T3HX 3.2 mm probe. Magic angle spinning was performed at 6.5 kHz using ceramic zirconia rotors of 3.2 mm in diameter, and the signal of talc was used to calibrate the silicon chemical shift scale (-98 ppm). Acquisition parameters used were the following: a spectral width of 300 ppm, a 90° pulse length of 5 µs, an acquisition time of 15 ms, a recycle delay time of 60 s and about 4400 accumulations (72 hrs.). High power proton dipolar decoupling during the acquisition time was set to 70 kHz.

### Differential Scanning Calorimetry (DSC)

The glass transition temperature (T_{g}) of the samples was determined using a DSC instrument (DSC 3+, METTLER TOLEDO GmbH) under a nitrogen atmosphere. Before analysis, the sample was dried overnight under a vacuum at 60°C. During each measurement, approximately 10 mg of dry sample was used. The samples were heated from room temperature to 120°C at a heating rate of 10°C/min (first measurement cycle), isothermal for 5 minutes, cooled to 0°C at a cooling rate of 10°C/min, isothermal for 5 minutes, then reheated to 200°C at a heating rate of 10°C/min (second measurement cycle). T_{g} was measured from the second measurement cycle.

### Dynamic mechanical analysis (DMA)

The dynamic strain sweep of the samples (cuboids: 49 * 6.2 * 2 mm) was conducted using a dynamic mechanical analyzer (DMA, Netzsch 242 C, Germany) in tensile mode at 25 °C. 10% static load of 15 N and (0 to 8 %) dynamic load of 10 N with an increment of 10 steps/dec was applied to the samples with a frequency of 0.5 Hz. Two strain sweeps were conducted on each sample with 30 minutes intervals. The storage modulus (E') as a function of strain was obtained.

### Thermogravimetric Analysis (TGA) of regio-selectively functionalized mesoporous silica

Thermogravimetric Analysis (TGA) was performed with A Mettler TGA 2 (Mettler Toledo (Columbus, Ohio, USA). 10 to 20 mg of silica powder are placed in an alumina crucible and heated from 25°C to 1000°C at 10°C min⁻¹ in nitrogen atmosphere until a gas shift at 750°C with an atmosphere of 20% O₂ and 70% N₂ until the end of the analysis at 1000°C. An empty alumina crucible is placed in the furnace for reference.

### Helium Ion Microscopy - Secondary Ion Mass Spectroscopy (HIM-SIMS) of regio-selectively functionalized mesoporous silica

The nanoparticles were deposited on silicon wafer (Siltronix, Archamps, France) beforehand. Measurements were performed with the Helium Ion Microscope (HIM) (Zeiss, Peabody, US) coupled with a Secondary Ion Mass Spectrometer (SIMS) developed at LIST. A Ne⁺ primary ion beam (accelerated at 25 keV and a current of 4 pA) was used for scanning over a 5x5 µm² area on the sample surface with a sub-20 nm spatial resolution. The images were recorded in a 512 by 512 pixels raster with an acquisition time of 1.5 ms·pixel⁻¹. Negative mode was used for the simultaneous detection of oxygen (¹⁶O⁻), carbon (²⁴C₂⁻) and bromine (⁷⁹Br⁻) ions with a sub-20nm spatial resolution. The data were treated with OpenMIMS Data Analysis Software (imaged plugin).

### Examples

The embodiments of the present disclosure will be better understood by looking at the example below.

Tetraethoxysilane (TEOS) (CAS 78-10-4), hexadecyltrimethylammonium *p-*toluene sulfonate (CTATos) (CAS 138-32-9), and triethanolamine (TEA) (CAS 102-71-6) have been purchased from Merck.

3-mercaptopropyltriethoxysilane (CAS 14814-09-6), hexyltrimethoxysilane (CAS 3069-19-0) and 7-bromoheptyltrimethoxysilane (CAS 1193317-40-6) have been purchased from Gelest.

### Synthesis of Regio-selectively Modified Dendritic mesoporous Silica particles (RMDS)

In an Orb Pilot 50 L reaction vessel, 34.7 g of triethanolamine and 192.0 g of hexadecyltrimethylammonium p-toluene sulfonate are dissolved in 10.0 L of de-ionized water. The solution is heated at 80°C and mixed for 120 min. Then, 1458.0 g of tetraethoxysilane (TEOS) are added. The reaction starts and is kept at 80°C under stirring until the end of the process. 15 min after the addition of TEOS, 166.3 g of 3-mercaptopropyltriethoxysilane (MPTES) is added to the reaction vessel. 120 min after the addition of TEOS, 167.3 g of hexyltrimethoxysilane are added. The reaction is then carried out for another 120 min at 80°C under stirring. At the end of the reaction, stirring is stopped and the silica particles are left to settle at the bottom of the reaction vessel. The supernatant above the settled silica is removed from the vessel via a pump and 15 L of de-ionized water is added. Silica and water are mixed for 12 h at room temperature, stirring is stopped and the silica particles are left to settle at the bottom of the reaction vessel. Again, the supernatant is removed, and 15 L of ethanol are added. Silica and ethanol are mixed for 12 h at reflux temperature under stirring. Finally, stirring is stopped and silica particles are let to settle at the bottom of the reaction vessel. The ethanol supernatant is removed. The highly concentrated silica particles in ethanol are then separated by centrifugation (4700 g for 1h). RMDS are then dried in an oven at 110°C for 48h and stored in a sealed container.

The dendritic silica particles were synthesized via a surfactant soft-templating sol-gel method. During such a process, the silica precursor, usually TEOS, polymerizes via hydrolysis-condensation to form the silica particles. The soft template surfactant is forming micelles whose shape and size are dictated by concentration and temperature conditions. The inter-molecular interactions between the surfactant and silica oligomers allow for the silica frame to grow around surfactant micelle. This phenomenon causes the growth of the dendritic porous silica. Advantage was taken of this process to purposely graft the silanes at specific location. First, the mercaptosilane MPTES was co-condensed with TEOS during the growth of the particles. This approach was taken to ensure its uniform distribution on the silica frame. At this stage, the pores of the particles are still filled with the surfactant. Taking advantage of these circumstances, grafting of the alkylsilane is the next logical step to ensure this silane is mainly connected to the periphery of the silica particles. After synthesizing the silica particles, the surfactant is removed to reveal the pores.

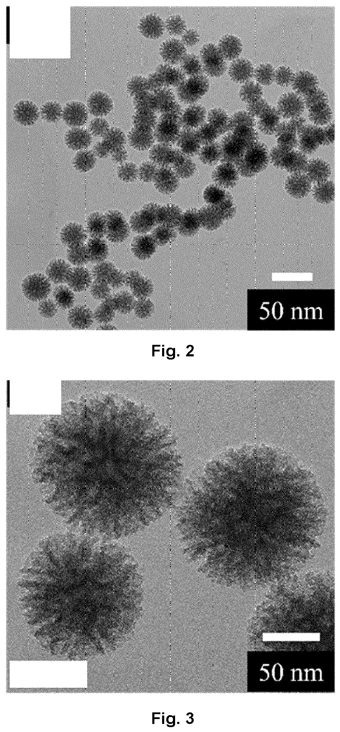

The reaction conditions and concentration of mercaptosilane were carefully chosen to ensure that the co-condensation of the mercaptosilane did not affect the size nor the structure of the particles. The step of alkylsilane grafting is carried out as a simple post-growth modification of the particles. The newly synthesized regio-selectively modified dendritic silica particle were fully characterized. **Figures 2** and **3** show the TEM images of the RMDS. It indicates that the dendritic porous structure is retained despite the introduction of MPTES in the silica matrix.

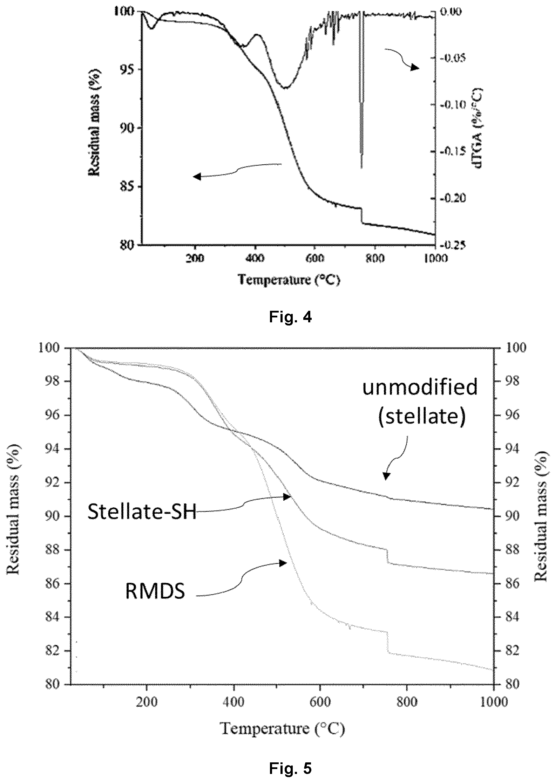

TGA curves display, on **figure 4****,** the mass-losses associated with volatiles desorption (below 100°C), surfactant traces desorption and pyrolysis at 240°C and silane pyrolysis at around 500°C-550°C. It has been reported that alkyl chains are more stable at a higher temperature than mercapto moieties, hence different pyrolysis temperature are observed.

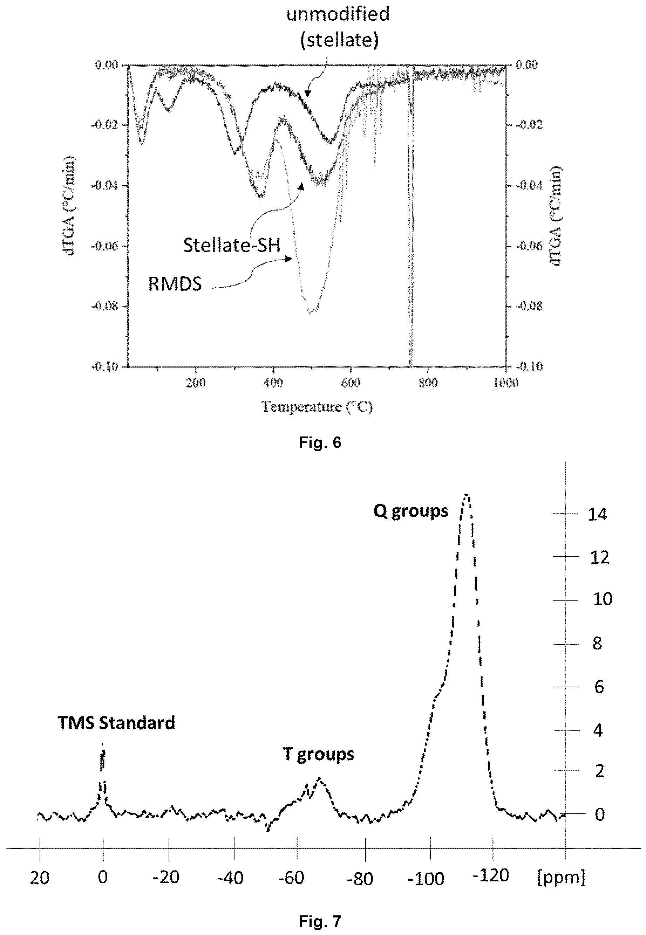

**Figures 5** **and** **6** respectively show the TGA data and dTGA data of unmodified stellate silica and of mercapto-functionalized (stellate-SH) in comparison with TGA data and dTGA of RMDS. The first observation is that silanized silicas do not show the same amount of de-hydroxylation as the non-modified mesoporous silica by the absence of the peak of dTGA at about 130°C, after the desorption of volatile compounds and moisture (peak at 60°C). This observation can be explained by the lower amount of silanol left to be de-hydroxylated on modified silica after their consumption by silanization. Regio-selectively modified dendritic silica share the same two peaks at respectively 370°C and 500°C that are attributed to the pyrolysis of mercapto groups and alkyl chain (propyl and hexyl) respectively. The only difference being that the intensity of the second peak is higher in the case of the regio-selectively silanized silica because of the grafting of hexyltrimethoxysilane, increasing the amount of alkyl chains present within the material. In the case of non-modified stellate silica, two peaks can also be observed, even though the first one is centered around a lower temperature than in the case of modified silica. Those two peaks are assigned to the pyrolysis of the residual surfactant. The co-condensation of MPTES in the stellate frame leads to the addition of 3.8% of mass. The grafting of hexyltrimethoxysilane adds 5.7% of additional mass. Overall, about 9.5% of the regio-selective modified dendritic silica (RMDS) particles mass correspond to the grafted silanes.

**Figure 7** shows the ²⁹Si solid state nuclear magnetic resonance (NMR) spectrum of the RMDS of the present disclosure, confirming the presence of T groups between -50 ppm and -70 ppm and thus the covalent bonding of the silane.

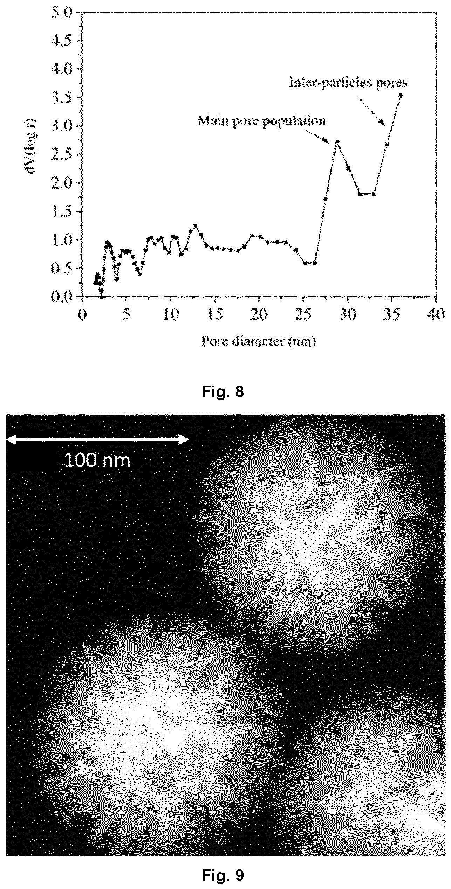

Nitrogen adsorption porosimetry results presented in **figure 8** and **table 1** allow monitoring the impact of the regio-selective modification of the dendritic structure of silica particles. The introduction of mercaptopropyl moieties reduces the pore volume and specific surface area, but not as much as the addition of hexyl chains, which seem to drastically reduce the adsorption of the gas molecules to the mesoporous surface, as seen with the decrease of pore volume from 2.61 cm⁻³/g to 1.54 cm⁻³/g. The pore size distribution was calculated from the nitrogen adsorption data using the DFT model. It shows wide open pores with a diameter of about 28 nm - 29 nm, in agreement with TEM observations.

**Table 1: Porosimetry results for the different synthesis steps.**

| **Sample** | **Specific surface area (m²/g)** | **Pore volume (CM³/g)** |
|---|---|---|
| **unmodified stellate** | 643 | 2.98 |
| **stellate-SH** | 557 | 2.61 |
| **RMDS** | 368 | 1.54 |

The regio-selective grafting of the mercaptosilane within the silica frame and the alkylsilane on the out-skirt of the particles has been characterized by Scanning Transmission Electron Microscopy coupled to an Energy Dispersive X-rays Spectroscope (STEM-EDS) and Helium Ion Microscope coupled with a Secondary Ion Mass Spectrometer (HIM-SIMS).

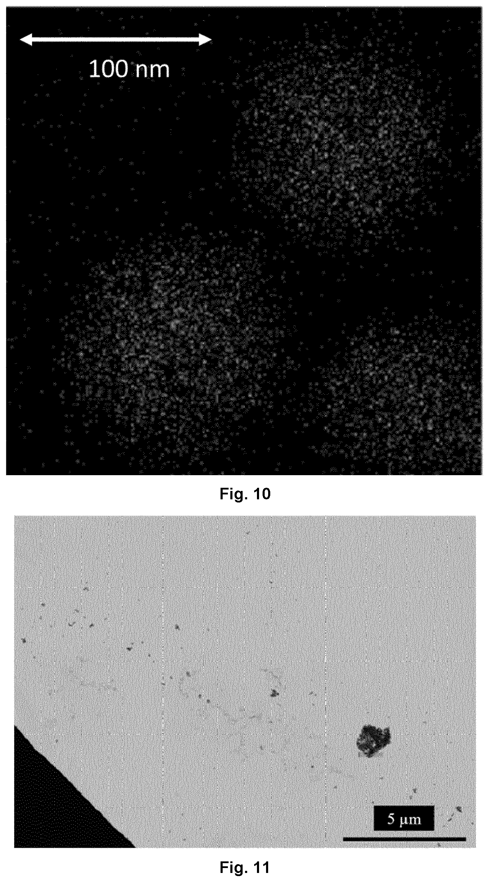

**Figure 9** shows a STEM bright field image of the RMDS particles, while **figure 10** shows the same image of the RMDS particles performed under EDS. **Figure 10** is relevant for indicating the presence of the sulfur atoms. Compared to the particles structure depicted in **figure 9****,** it can be confirmed that sulfur is distributed evenly across the silica particles and no segregation can be observed from these images.

To investigate the consequences of the two-steps silanization process of dendritic silica and the spatial distribution of the alkylsilane on the porous silica particles, an alternative regio-selectively modified dendritic silica was synthesized by substituting the hexyltrimethoxysilane by 7-bromoheptyltrimethoxysilane. This silane was chosen for its similar size and structure, to mimic as much as possible the original hexyltrimethoxysilane. The bromine atom is used as a labelling agent as carbon alone would not enable to discriminate between mercapto- and alkylsilane since both contain carbon atoms. Bromine-labelled regio-selectively modified dendritic silica particles are thus synthesized for imaging purposes.

### Bromine-labelled Regio-selectively Modified Dendritic Silica particles (Br-RMDS)

Bromine-labelled regio-selectively modified dendritic silica particles are synthesized for elemental imaging purpose and have been synthesized as follow. In a 50 mL round-bottom flask, 25 mL of de-ionized water, 0.48 g of CTATos and 86.7 mg of triethanolamine were mixed at 80°C for 2 h. The reaction is kept at 80°C under stirring until the end of the reaction. 3.645 g of TEOS were added. 417 mg MPTES were added in the round-bottom flask 15 min after the addition of TEOS. 522.5 mg of 7-bromoheptyltrimethoxysilane were added 2 h after the TEOS addition. After this addition, the reaction is kept at 80°C under stirring for 2 h. At this stage the reaction was stopped, and the silica was separated by centrifugation at 10.000g for 10min. The supernatant was poured out and fresh de-ionized water was added to the centrifuge tube. The tube was vigorously shaken for to re-disperse the silica for 5 min. The silica was separated by centrifugation at 10,000g for 10 min and added to a 200 mL round-bottom flask. 100 mL of ethanol were added to this flask and the silica dispersion was heated to reflux temperature and stirred for 12 hrs. Finally, the silica was separated by centrifugation at 10.000g for 10 min, dried in an oven at 110°C for 48 h and stored in a sealed container.

The distribution of bromine across the silica was mapped by elemental mapping of the particles by nano-Secondary Ion Mass Spectroscopy (SIMS) using a Helium Ion Microscope coupled with a SIMS detector.

The distribution of bromine across the silica was mapped by elemental mapping of the particles by nano-Secondary Ion Mass Spectroscopy (SIMS) using a Helium Ion Microscope coupled with a SIMS detector. The distribution of oxygen (¹⁶O), carbon (¹²C-¹²C), and bromine (⁷⁹Br) was studied.

Oxygen mapping allows to clearly distinguish the silica particles. The distribution of carbon across the particles has been as being homogeneous and in agreement with the images of **figures 9** and **10****.** This was expected due to the co-condensation of the mercaptopropyl silane during the particle's growth. Despite the low concentration of bromide per molecule, and by voxel sputtered, the SIMS mapping has shown the decrease of bromine density inside particles. Especially for isolated particles, a distinctive crown of bromine was observed.

Stöber silica particles, which are non-porous and unmodified silica particles and non-modified porous silica particles (stellate silica particles) have been synthesized and used to assess the impact of morphology and silanization over the rubber composite properties.

### Stöber silica particles synthesis

The production of Stöber silica particles was done according to the following protocol. 3537.4 g of absolute ethanol, 141.4 g of de-ionized water and 178.3 g of tetraethoxysilane (TEOS) are added to a 5 L reaction vessel and homogenized for 10 min on a magnetic stirring plate. Then, 165.0 g of a 25 wt.% aqueous ammonia solution are added to the solution. The solution is let to react for 24 h at room temperature and constant mixing. After this delay, the silica suspension was transferred in a 20 L round-bottom flask and dried under reduced pressure using a Buchi R-220 Pro rotary evaporator to separate the particles from the liquid. Finally, Stöber silica powder was dried in the oven at 110°C for 48 h and stored in a sealed container. Stöber particles consist in spherical and non-porous colloidal silica of a controlled size (here with a diameter of 110 nm).

### Non-modified silica particles synthesis (stellate silica particles)

In 2 L reaction vessel, 3.47 g of triethanolamine and 19.2 g of hexadecyltrimethylammonium *p*-toluene sulfonate are dissolved in 1.0 L of de-ionized water. The solution is heated at 80°C and mixed for 2 h. Then, 1458.0 g of tetraethoxysilane (TEOS) are added. The reaction is carried for 2 h at 80°C under stirring. At the end of the reaction, stirring is stopped and the silica particles are let to settle at the bottom of the reaction vessel. Most of the supernatant above the settled silica is removed from the vessel and 1 L of de-ionized water is added. Silica and water are mixed for 12 h at room temperature, then stirring is stopped and the silica particles are let to settle at the bottom of the reaction vessel. Supernatant above the settled silica is removed from the vessel and 1 L of ethanol is added. Silica and ethanol are mixed for 12 h at reflux temperature under stirring. Finally, stirring is stopped and the silica particles are let to settle at the bottom of the reaction vessel. Ethanol supernatant above the settled silica is removed from the vessel. The highly concentrated silica particles in ethanol are then separated by centrifugation (4700 g for 1 h). Regio selectively functionalized stellate silica are then dried in an oven at 110°C for 48 h and stored in a sealed container.

### Preparation of rubber compositions with silica particles as reinforcement material

The effect of silica fillers, and fillers in general, on a polymer matrix is a result of the four main ways the particles interact with the polymer chains, and how their dynamic is affected by these interactions. The filler-filler interaction of silica is dependent on the hydrogen bonding of particles, which dictates how fillers interact, and is responsible for the aggregation of the particles. These interactions may be classified in two types.

First, the low strain reversible interaction is responsible for reinforcement. It is assessed by the measurement of the drop of storage modulus at low strain, *i.e*., the Payne effect. This can be directly correlated to the rolling resistance and wet grip properties of a rubber compound.

Second, the high strain irreversible interaction is characterized by the Mullins effect, when a compound is deformed beyond a previous maximum. This effect can also include phenomenon such as filler-polymer debonding or crack initiation and propagation.

Moreover, fillers and polymer can interact in two ways, being first the steric hindrance of the particles over the polymer chain, resulting from the network of filler trapping rubber, and secondly, the covalent bonding of fillers and polymer when a coupling agent is used like mercapto organosilanes. Both are responsible for the reinforcement of the material. In a rubber compound, all these interactions work together and provide its properties to the material.

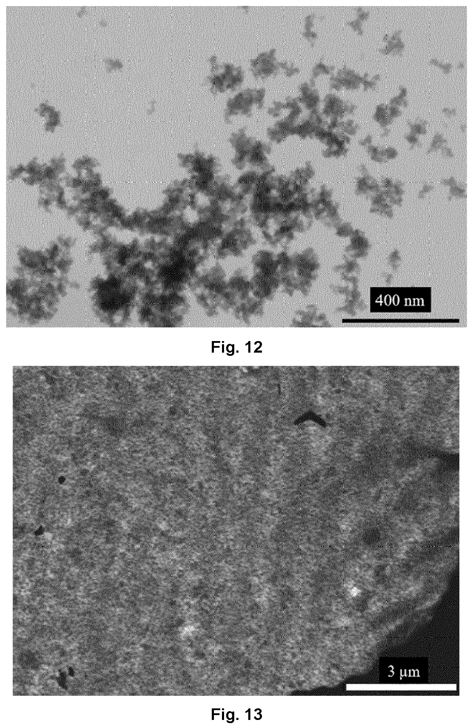

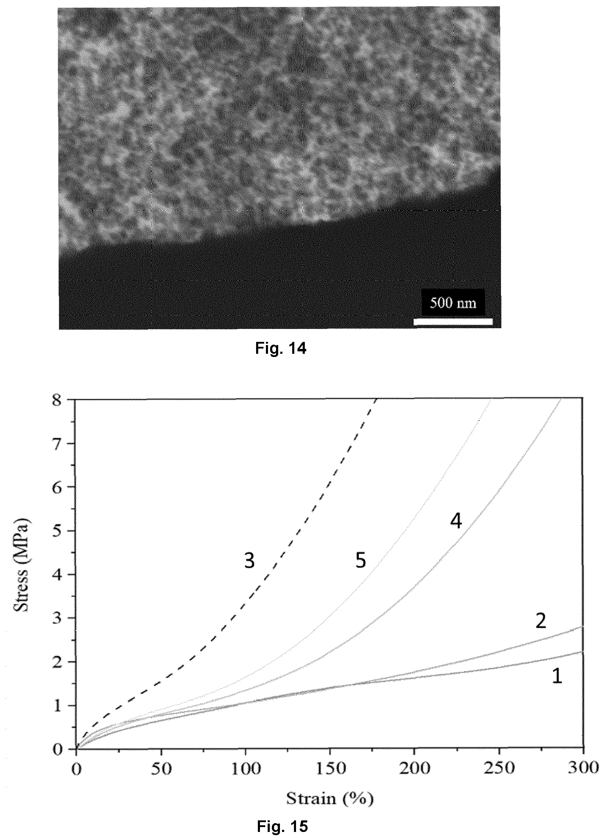

Consequently, the filler size and specific surface area, loading level, and surface modification are key parameters that will affect how and how much fillers interact with themselves and with the polymer chains. Fractal precipitated silicas like HDS 200MP (see **figures 11** and **12****)** are a gold standard and are commonly used in tire tread compound. It consists in 10 nm primary particles in the form of large agglomerates (200µm) that forms a percolating network made of fractal shaped aggregates of medium size (50-100 nm) once mixed in the rubber (see **figures 13** and **14****).**

This kind of silica is silanized *in-situ* by the addition of liquid organosilanes during the rubber mixing process. This filler reveals high interaction with the polymer thanks to the interaction with the trapped rubber within the fractal structure and its silanized surface. One limitation of such a filler is the susceptibility of its reinforcing aggregates to dislocations and breaks under mechanical stress, which increases hysteresis and impairs its reinforcing properties

To identify the potential of regio-selectively modified dendritic silica (RMDS) fillers, the effect of the filler morphology and chemical modification was first investigated. Non-functionalized Stöber and stellate silica were used to show the impact of the porous structure and functionalization on the dispersion of the fillers and mechanical properties of the composites.

Silica particles were incorporated in a SBR-BR rubber matrix for the fabrication of silica-rubber composites. The ingredients and the mixing steps for the fabrication of the rubber composition comprising the RMDS filler are detailed in **table 2.**

**Table 2: Ingredients and mixing steps for the fabrication of the rubber composition. The quantities are given in phr.**

| | **Step 1 80°C for 10'** | **Step 2 80°C for 7'** | **Step 3 60°C for 1'45"** |
|---|---|---|---|
| **Poly styrene-butadiene** | 80 | - | - |
| **polybutadiene** | 20 | - | - |
| **TDAE Oil** | 25 | - | - |
| **Zinc Oxide** | 0.5 | - | 2 |
| **Stearic acid** | 3 | - | - |
| **Silica** | 65 | 15 to 35 | - |
| **6PPD** | - | 2.5 | - |
| **TESPD Silane** | - | **varying** | - |
| **Sulfur** | - | - | 1.1 |
| **MBT** | - | - | 0.3 |
| **DPG** | - | - | 3.2 |
| **CBS** | - | - | 2.3 |

| | | | |
|---|---|---|---|
| Note: TESPD silane quantity is 10% of the silica content. For 80 phr of silica, 8phr of TESPD silane are used. For 10 phr of silica, 1phr of TESPD silane is used. | | | |

At each mixing step, ingredients have been mixed using a HAAKE^{™} PolyLab^{™} QC ThermoScientific internal mixer and then the green compound was further mixed in a roll-mill for 6 passes at 50°C. The material obtained at one step is then mixed with the ingredients of the following step. All final green compounds have been cured in a hydraulic press at 170°C for 10 min under a pressure of 150 kPa.

Five rubber compositions have been tested, each of said five rubber compositions comprising one type of reinforcement material. **(1)** The first type consists in non-porous unmodified silica particles, at 80 phr. **(2)** The second type consists in porous unmodified silica particles, at 80 phr. **(3)** The third type consists in fractal precipitated silica such as HDS 200 MP, at 80 phr. **(4)** The fourth type consists in RMDS at 80 phr. **(5)** The fifth type consists in RMDS at 90 phr. As RMDS contains about 9.5% of silane, the amount of silica for a given mass of filler is lower than for other pure silica fillers, especially HDS 200MP. To compensate this, the 90 phr RMDS sample was prepared.

The silica content in the different rubber compositions **(1) to (5)** is summarized in **table 3.**

**Table 3: Silica content in the different rubber compositions (1) to (5) (in phr).**

| | | **Stöber** | **Stellate** | **RMDS** | **HDS 200MP** |
|---|---|---|---|---|---|
| **(1)** | **Stöber 80phr** | 80 | - | - | - |
| **(2)** | **Stellate 80phr** | - | 80 | - | - |
| **(3)** | **HDS 200MP 80phr** | - | - | - | 80 |
| **(4)** | **RMDS 80phr** | - | - | 80 | - |
| **(5)** | **RMDS 90phr** | - | - | 90 | - |

**Figure 15** represents the stress in function of the strain of the different rubber compositions comprising fillers.

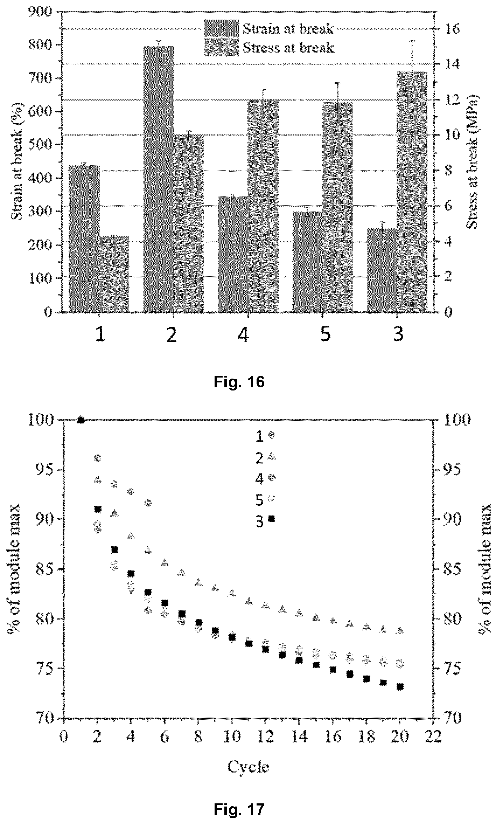

**Figure 16** is representation of the strain at break and the stress at break of the different rubber compositions comprising fillers.

**Figure 17** shows the evolution of maximum strength under cyclic tensile test of the different rubber compositions comprising fillers.

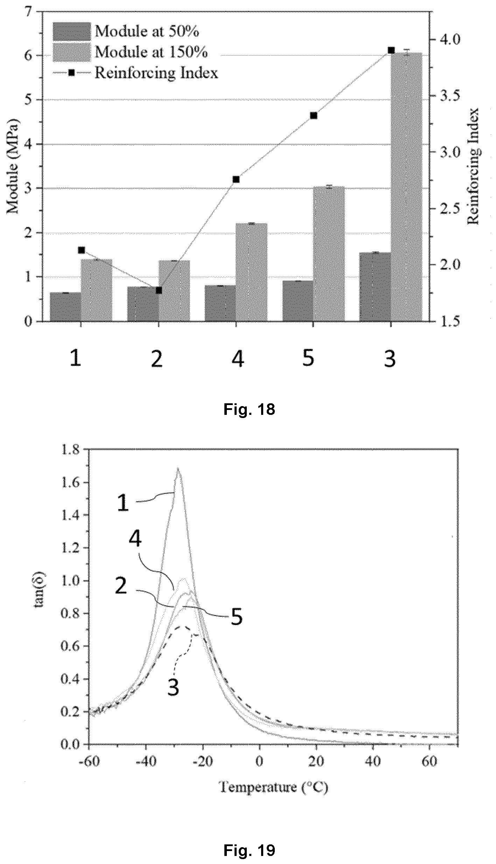

**Figure 18** shows the reinforcing index of the different rubber compositions comprising fillers calculated as a ratio of the modulus at 150% strain by the modulus at 50% strain.

Rubber composition with non-porous and non-modified Stöber silica **(1)** shows the overall worst properties, with no strain hardening in tensile testing, low moduli and reinforcing index of 2.13, as well as the lowest stress at break of about 4MPa. This composite is the only one unable to withstand more than 5 tensile cycles upon breaking.

Rubber composition with porous non-modified stellate silica **(2)** also displays no strain hardening and has an even lower reinforcing index of 1.77 despite its higher stress at break. This compound is capable of very high elongation, almost 800% strain, and thus reach higher ultimate stress than rubber composition with non-porous and non-modified Stöber silica **(1).**

Interestingly, at low strain (below 25%), the rubber composition with porous non-modified stellate particles provides the composite with a high strength (see **figure 15****),** with a steeper increase of the strength compared to other samples. The porous structure seems to give an advantage over the non-porous Stöber particles in terms of ultimate properties and fatigue resistance, as rubber composition with Stellate silica compound shows the lowest loss of strength over tensile cyclic testing. The lack of coupling agent, and thus silica-rubber crosslinking is responsible of the absence of stress hardening in the case of Stöber or non-modified Stellate silica: after the initial deformation below 75% strain, only a linear deformation is observed. It can be suggested that the low-strain reinforcing effect of non-modified stellate silica arises from the hydrogen bonding of the bare silica surface.

Unlike the two previous rubber composition, rubber composition with RMDS silica as filler shows strain hardening and has a higher reinforcing index of 2.76 and 3.32 at 80 phr **(4)** and 90 phr **(5)** respectively, as well as good ultimate properties, with ultimate strength of 12 and 11.8 MPa respectively. The porous structure and regio-selective modification of the dendritic silica do provide obvious benefits over non-porous and non-modified porous silica.

Though the additional 10 phr increase the reinforcement of the polymer, it does not compensate the mechanical properties discrepancy observed with the HDS 200MP fractal filler system. Dynamic Mechanical Analysis (DMA) was performed to further investigate the filler-filler interaction and understand the difference of behavior of RMDS particles versus the fractal HDS 200MP filler system.

**Figure 19** shows the tan d curves at 1 Hz of the different rubber compositions comprising fillers.

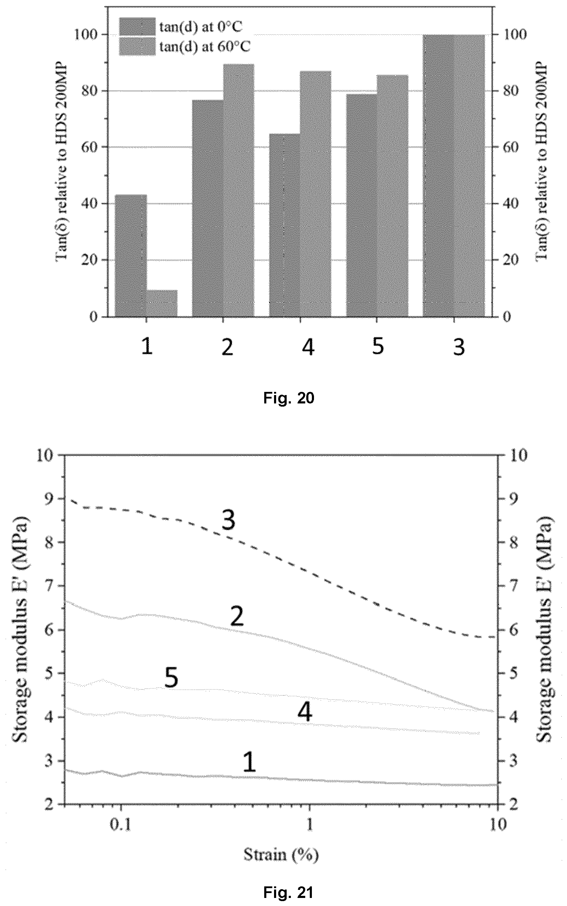

**Figure 20** shows the tan d at 0°C and 60°C of the different rubber compositions comprising fillers relative to the rubber composition **(3)** comprising fractal precipitated silica such as HDS 200 MP, at 80 phr. The tan d at 0°C represents the wet grip. Higher is tan d at 0°C, better it is for the rubber composition. The tan d at 60°C represents the rolling resistance. Lower is tan d at 60°C, better it is for the rubber composition.

**Figure 21** represents the storage modulus E' versus strain of the different rubber compositions comprising fillers.

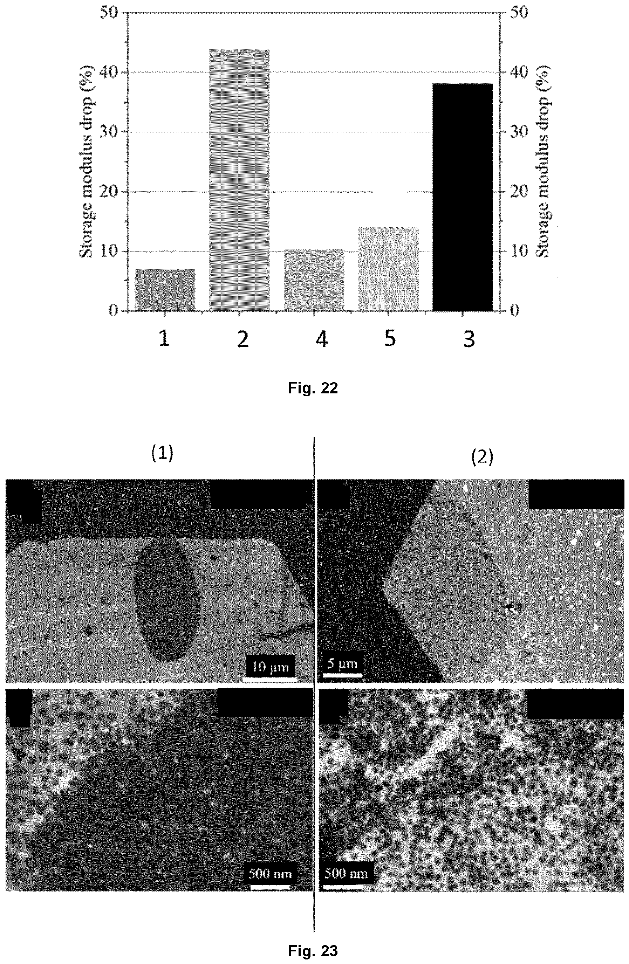

**Figure 22** shows the Payne effect through decrease of storage modulus, measured at 10 Hz.

The amplitude of the tan d peak is reflecting the chain mobility of a polymer reaching a maximum at the glass transition T_{g}. In the case of filled polymers where the chain dynamic is restricted close to the filler particles, the tan d peak amplitude is lowered as polymer chain mobility is reduced. In the case of rubber composition with non-porous and unmodified silica particles as filler **(1),** the limited dispersion and absence of functionalization prevent significant interaction between fillers and polymer chains, resulting in high tan d peak, similar to unfilled SBR.

Tan d also characterizes the tendency of rubber to lose energy at a given mechanical solicitation frequency. Road traction is associated to high frequency solicitation of road asperity and bumps, while rolling resistance correspond to high frequency deformation of the tire flexing while rolling. According to the Williams-Landel-Ferry relationship of the time-temperature equivalence, high temperatures are equivalent to low frequency and low temperature to high frequency. In the present case tan d at 0°C serves as the indicators of traction performances, and at 60°C, it represents the rolling resistance of the composites. Ideally, high energy losses are desired for traction and breaking, and minimal losses are targeted to reduce rolling resistance.

In the case of rubber composition with non-porous and unmodified silica particles as filler **(1),** the filler-polymer interaction is so weak that aggregates are barely affected by the composite deformation which is corroborated by the height of the tan d peak, translating the high mobility of the polymer chains. The low level of Payne effect is another element explaining the lack of reinforcement. Indeed, the amount and size of aggregates do not allow for the formation of a reinforcing percolating network.

On the other side, rubber composition with porous non-modified stellate particles **(2)** shows the highest Payne effect of all samples with a drop of elastic modulus of 44% in **figure 22****.** This confirms the hypothesis that this filler exhibits strong inter-particle interactions at low strain, most likely through hydrogen bonding, corroborating the tensile behavior of these composite.

Rubber compositions with RMDS particles as fillers exhibit very low Payne effect, with an elastic modulus drop 10% and 13% for 80 phr **(4)** and 90 phr **(5)** composite respectively, when compared to rubber composition with porous unmodified Stellate **(2)** or with HDS 200MP **(3)** (38% drop). This is characteristic of low filler-filler interactions in the composite. Consequently, the wet traction indicator tan d at 0°C of rubber composition with 80 phr of RMDS particles **(4)** is lower than rubber composition having Stellate **(2)** or HDS 200MP **(3).** The rubber composition with 90 phr of RMDS particles **(5)** manages to slightly increase this parameter while maintaining low tan d at 60°C, but once again does not reach the level of the rubber composition having 80 phr of HDS 200MP.

The comparison of rubber composition with Stöber **(1),** non-modified stellate silica **(2)** and RMDS particles **(4)** and **(5)** indicates that the dendritic structure and its regio-selective modification manage to bring more reinforcement to the polymer by crosslinking and trapping rubber in the porous structure. However, the filler-filler interactions are too weak to provide sufficient reinforcement and traction properties. Also, the rubber compositions with RMDS particles **(4)** and **(5)** behave as a low energy dispersion filler compared to HDS 200MP, as seen with the low tan d at 0°C and 60°C values seen in **figure 20****.** It is beneficial in term of rolling resistance but not for the grip and traction.

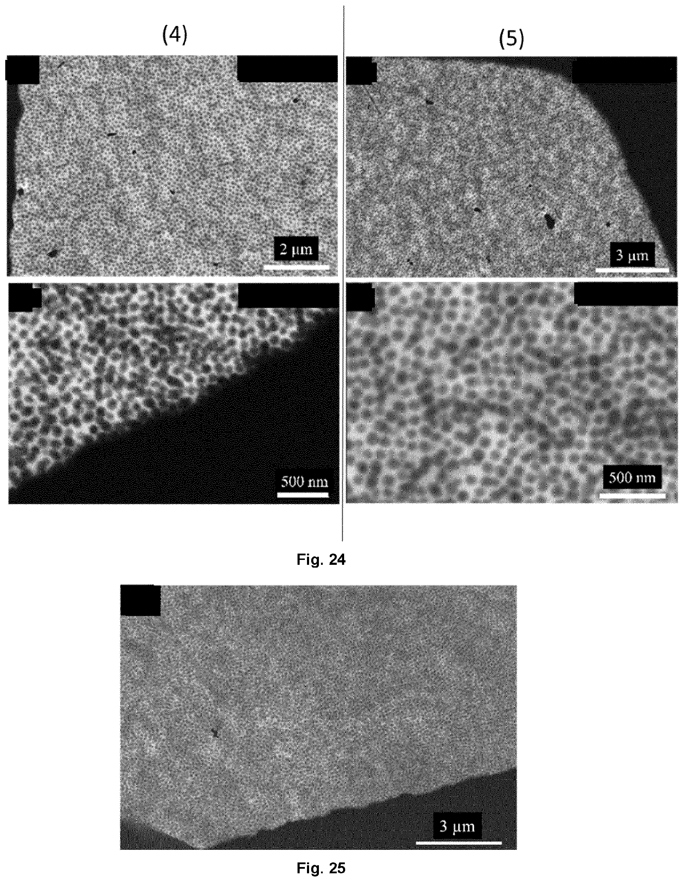

STEM images of the rubber compositions **(1)** and **(2)** shown in **figure 23****,** and of the rubber compositions **(4)** and **(5),** shown in **figure 24****,** bring new elements to understand the underlying phenomenon at play.

Rubber composition with non-porous and unmodified Stöber silica particles **(1)** and rubber composition with porous non-modified Stellate silica particles **(2)** both display particles agglomeration. The presence of agglomerates diminishes the density of silica in the homogeneous areas and prevents to reach a reinforcing percolation network at which the polymer chains would be significantly affected by the particle density.

In fact, the lack of silanization of non-porous and unmodified Stöber silica particles appears to be responsible for debonding and crack propagation, explaining the low mechanical properties of the rubber compositions comprising such fillers **(1).** On the other side, despite the absence of siliane on the unmodified stellated silica particles, there is a better dispersion with still some agglomeration in such rubber composition **(2).** The absence of silane in Stöber and non-modified stellate particles is clearly responsible for the low reinforcing properties of the corresponding rubber composition, but the results hint that the porous structure already bring reinforcement on its own.

On the other hand, rubber compositions with RMDS particles as reinforcement material **(4)** and **(5)** show very good properties for reinforcement and low energy dispersion, but the impossibility to form a percolating network prevent it to reach the level of fractal system in term of reinforcement or wet grip.

To overcome this, it was hypothesized that the use of HDS 200MP as an additive in small amount should increase the filler-polymer interaction by densifying the filler network and fill the gaps between the spherical RMDS particles. A dual-filler approach has thus been undertaken.

This dual filler approach aims to investigate the effect of the incorporation of small amount of HDS 200MP to increase filler-filler interaction in rubber composition comprising RMDS as a first type of reinforcement material by filling the gaps between the bigger RMDS particles.

Subsequently, six additional rubber compositions have been prepared, each of said six rubber compositions comprising a reinforcement material comprising a first type of silica and a second type of silica: **(6)** The sixth type consists in non-porous unmodified silica particles, at 80 phr, to which 10 phr of aggregates of silica (*e.g.,* HDS 200 MP) have been added. **(7)** The seventh type consists in porous unmodified silica particles, at 80 phr, to which 10 phr of aggregates of silica (*e.g.,* HDS 200 MP) have been added. **(8)** The eighth type consists in RMDS at 80 phr, to which 5 phr of aggregates of silica (*e.g.,* HDS 200 MP) have been added. **(9)** The nineth type consists in RMDS at 80 phr, to which 10 phr of aggregates of silica (*e.g.,* HDS 200 MP) have been added. **(10)** The tenth type consists in RMDS at 90 phr, to which 5 phr of aggregates of silica (*e.g.,* HDS 200 MP) have been added. **(11)** The eleventh type consists in RMDS at 90 phr, to which 10 phr of aggregates of silica (*e.g.,* HDS 200 MP) have been added.

The silica content in the rubber compositions **(6) to (11)** is summarized in **table 4.**

**Table 4: Silica content in the different rubber compositions (6) to (11) (in phr).**

| | | **Stöber** | **Stellate** | **RMDS** | **HDS 200MP** |
|---|---|---|---|---|---|
| **(6)** | **Stöber 80+1 0phr** | 80 | - | - | 10 |
| **(7)** | **Stellate 80+10phr** | - | 80 | - | 10 |
| **(8)** | **RMDS 80+5phr** | - | - | 80 | 5 |
| **(9)** | **RMDS 80+10phr** | - | - | 80 | 10 |
| **(10)** | **RMDS 90+5phr** | - | - | 90 | 5 |
| **(11)** | **RMDS 90+10phr** | - | - | 90 | 10 |

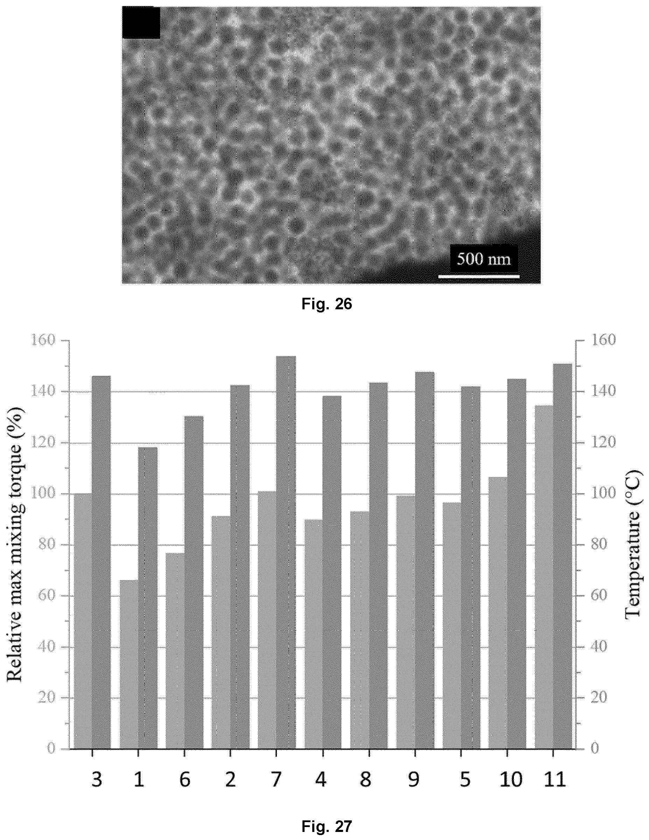

STEM images of the rubber composition **(11),** namely comprising 90 phr of RMDS particles and 10 phr of HDS 200 MP particles, are displayed in **figures 25** and **26****.**

The addition 10 phr of HDS 200MP clearly increases the particle density, and small HDS 200MP particles can be spotted on the STEM images in between the larger RMDS sphere. Despite the increase in silica loading, no major agglomeration has been revealed.

The composite shows minor agglomerates and almost no strain induced cavities. Interestingly, rubber composition with RMDS as fillers shows less agglomerates at 90+10 phr **(11)** than 90phr **(5).** This is likely because a higher filler loading induces higher mixing torque during compounding, as it can be seen on the right bars of **figure 27****.**

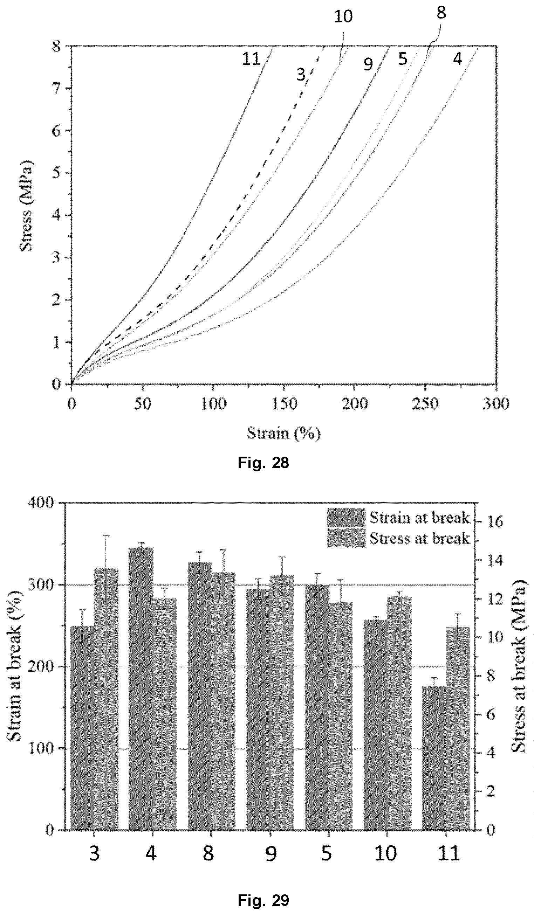

**Figure 28** represents the stress in function of the strain of the different rubber compositions comprising fillers based on RMDS silica. The addition of HDS 200MP increases the reinforcement of the rubber composition up to a point where RMDS 90 + 10 phr **(11)** is higher than the rubber composition with pure fractal filler **(3),**

**Figure 29** is representation of the strain at break and the stress at break of the different rubber compositions comprising fillers based on RMDS silica.

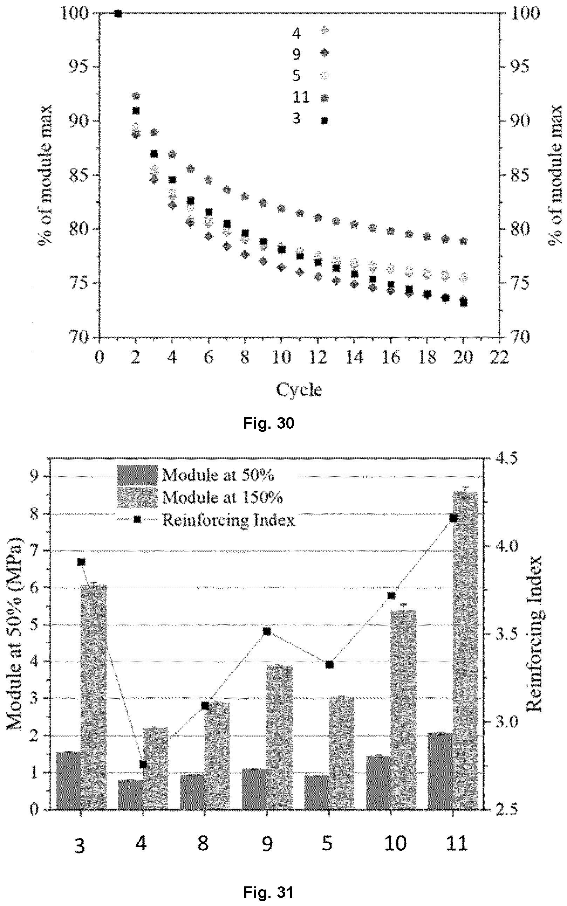

**Figure 30** shows the evolution of maximum strength under cyclic tensile test of the different rubber compositions comprising fillers based on RMDS silica. The rubber composition **(11),** with RMDS at 90+10 phr as a filler, displays better fatigue properties as shown by the cyclic tensile results.

**Figure 31** shows the reinforcing index of the different rubber compositions comprising fillers based on RMDS silica calculated as a ratio of the modulus at 150% strain by the modulus at 50% strain.

The reinforcing index of 4.15 of the rubber composition **(11)** is also higher than the reinforcing index of the rubber composition **(3),** which is 3.9.

The trade-off is a lower ultimate strain and consequently a lower stress at break for all rubber composition comprising as filler over 90 phr of RMDS compared to 80 phr.

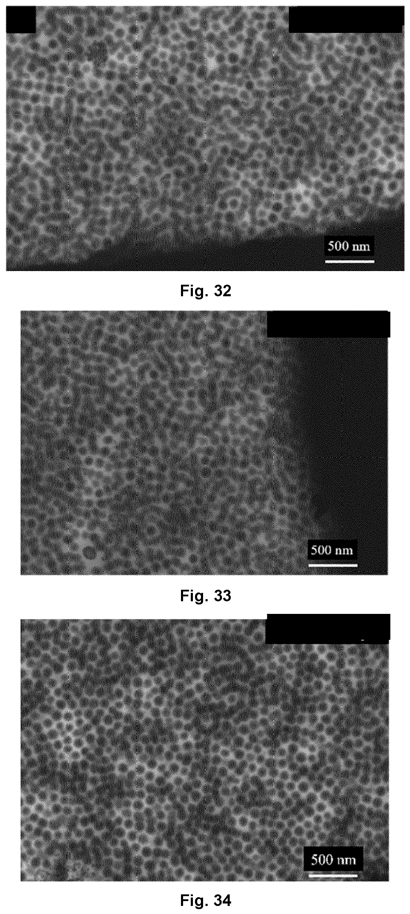

**Figures 32** to **34** are the STEM images of the rubber composition **(8), (9)** and (10), namely having a dual-filler silica filler.

The main effect of the dual-filler system is the drastic increase of filler-polymer interaction, as shown by DMA data.

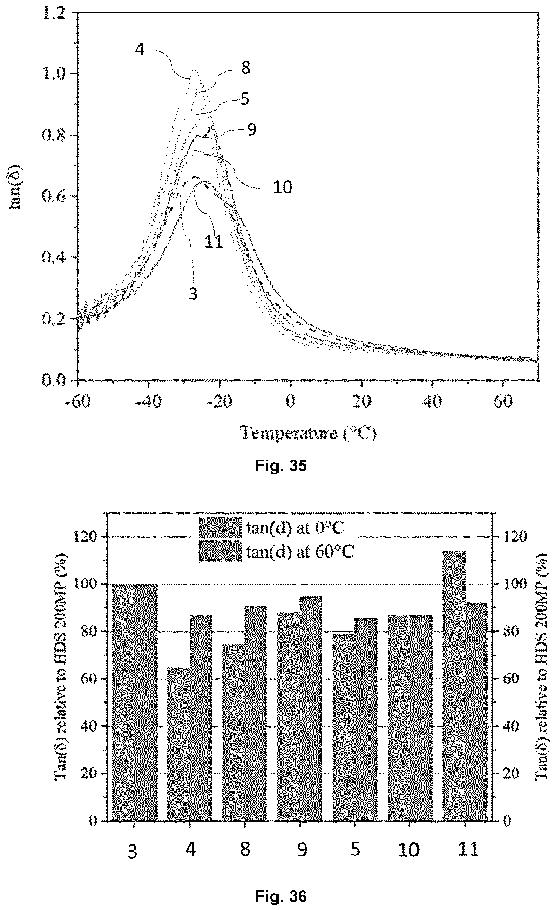

**Figure 35** shows the tan d curves at 1 Hz of the different rubber compositions comprising fillers based on RMDS silica.

**Figure 36** shows the tan d at 0°C (wet grip) and 60°C (rolling resistance) of the different rubber compositions comprising fillers based on RMDS silica relative to the rubber composition **(3)** comprising fractal precipitated silica such as HDS 200 MP, at 80 phr.

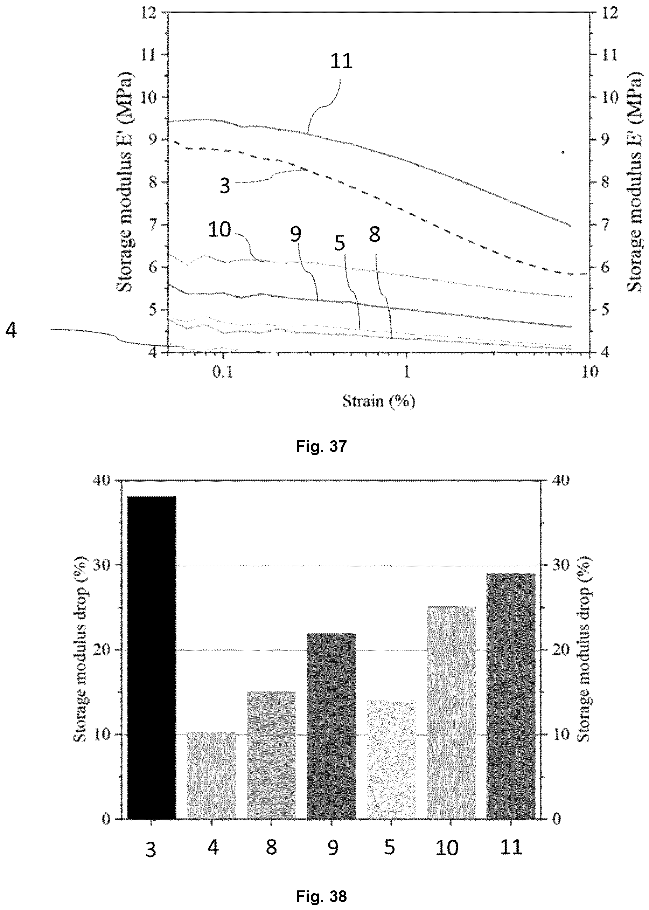

**Figure 37** represents the storage modulus E' versus strain of the different rubber compositions comprising fillers based on RMDS silica.

**Figure 38** shows the Payne effect through decrease of storage modulus, measured at 10 Hz, of the different rubber compositions comprising fillers based on RMDS silica.

The combination of the regio-selectively modified dendritic silica and the smaller fractal HDS 200MP allows to drastically increase the filler-filler interaction within the rubber compositions, as seen in by the increase in storage modulus drop in **figure 38****.** The particle density also affects the filler-polymer network and limit the polymer chain mobility as seen in **figure 35****.** The increased level of interaction between filler and rubber is supported by the decrease in the tan d peak with increasing filler loading. The addition of small amount of HDS 200MP increase the Payne effect linearly for 80 phr compounds, but the effect is more pronounced when 5 phr are added to 90 phr of RMDS, followed by smaller increase from 90+5 to 90+10 phr. This is the sign that at filler loading of 90+5phr in the rubber composition **(10),** the percolation of the filler network is reached, and mechanical properties change drastically. This is seen especially for wet grip and rolling resistance indicator tan d in **figure 36****,** where the combination with HDS 200MP allows to improve the traction indicator tan d at 0°C of all sample, with the rubber composition having RMDS at 90+10 phr as fillers **(11)** surpassing the rubber composition having HDS 200MP at 80 phr as fillers **(3),** while still having a lower rolling resistance. Interestingly, both tensile strength testing and DMA show that this filler combination seems to have a synergetic effect.

Overall, the rubber composition having the 90+10 phr dual-filler **(11)** benefits from the advantages of the two fillers: good fatigue resistance and lower rolling resistance due to RMDS silica, high wet grip indicator due to HDS 200MP (superior to the pure fractal filler sample), and good reinforcement due to both fillers.

The porous morphology of RMDS silica mimics a fractal structure and enable for high interaction between the silica particles and polymer chains while keeping a great dispersion with minimal agglomeration and strain induced cavities within the corresponding rubber composition. The advantage of RMDS over HDS 200MP silica particle resides in the fact that it can be qualified of an "unbreakable aggregate". The addition of a small amount of HDS 200MP fills the gaps between RMDS particles in the rubber matrix and enables to compensate for their lack of filler-filler, as supported by the increase in Payne effect seen in **figure 38****.**

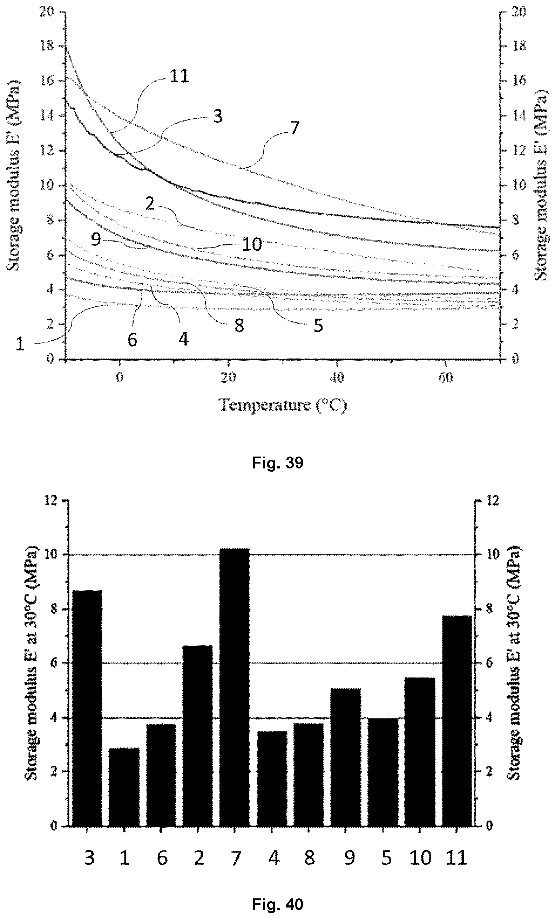

**Figure 39** represents the storage modulus in function of the temperature of the different rubber compositions, while **figure 40** represents the storage modulus measured at 30°C, illustrating the stiffness of the rubber composition at 15% strain.

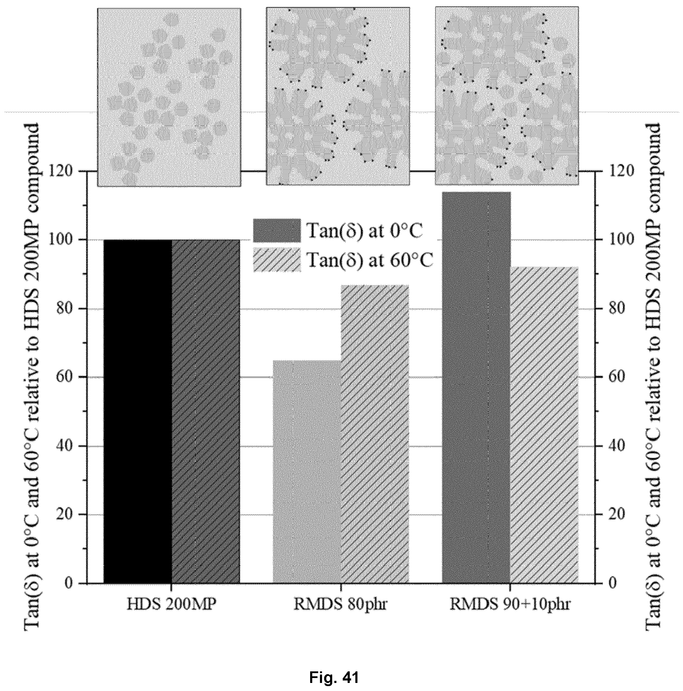

**Figure 41** schematically illustrates the rubber composition comprising mesoporous silica particles as unbreakable aggregate (middle part) and with a percolation network to increase the fillers interactions (right part). This has been put in correlation with a rubber composition that comprises only fractal precipitated silica (such as HDS 200 MP, at 80 phr) (left part). The illustrations are put in correlation with the wet grip values (tan d at 0°C) and the rolling resistance values (tan d at 60°C) of the rubber composition, where it can be seen that, relative to a rubber composition comprising fractal precipitated silica as fillers, the inclusion of a percolation network under the form of a second type of silica in the reinforcement material already comprising mesoporous silica particles, increases the wet grip values and decreases the rolling resistance values, and thus improving the whole properties of the rubber composition.

Under mechanical deformation and sufficient strain, silica particles are pulled apart from one another as the composite material is elongated. When large smooth particles without any silanization are used, silica particles do not interact with the polymer chains and barely restrain their dynamic, as in the case where non-porous and unmodified Stöber silica particles are used as fillers in the rubber compositions **(1, 6).** For rubber composition **(3)** with fractal precipitated silica as fillers HDS 200MP, particle aggregates manage to trap rubber in so-called inter-particles porosity.

In the case of rubber composition having RMDS as fillers, the intra-particle porosity plays the same role, but unlike HDS 200MP aggregates, RMDS particles cannot be pulled apart and do not suffer permanent dislocation. Subsequently, the rubber compositions with the RMDS particles as fillers **(4, 5, 8, 9, 10, 11)** behave much better under fatigue and show less hysteresis and Payne effect.

Finally, the addition of a small amount of the HDS 200MP to rubber composition already having RMDS particles as fillers enables to fill the gaps between the particles and further increases the filler-filler interaction without overly increasing Payne effect, leading to rubber composition **(8, 9, 10, 11)** with superior reinforcement, wet grip and rolling resistance while keeping good fatigue resistance.

## Claims

1. A rubber composition comprising at least rubber and reinforcement material, wherein the reinforcement material comprises mesoporous silica particles, wherein said mesoporous silica particles comprise an external surface with pores and an internal core comprising channels extending to said pores, the external surface being functionalized with a first type of functional group and the channels having a surface functionalized with a second type of functional group, the first type of functional group being different from the second type of functional group.

2. The rubber composition according to claim 1, wherein said mesoporous silica particles show a dendrite morphology with dendrites evidenced by transmission electron microscopy.

3. The rubber composition according to claim 1 or 2, wherein the mesoporous silica particles of the reinforcement material are a first type of silica, and wherein the reinforcement material further comprises a second type of silica being aggregates of silica.

4. The rubber composition according to claim 3, wherein the aggregates of silica comprise silica nanoparticles and wherein the silica nanoparticles have a diameter ranging between 1 nm and 100 nm as determined by scanning transmission electron microscopy.

5. The rubber composition according to claim 3 or 4, wherein the aggregates of silica have a size ranging between 50 µm and 350 µm as determined by scanning transmission electron microscopy; and/or wherein the second type of silica is in an amount of at least 10.0 phr.

6. The rubber composition according to at least one of the previous claims, wherein said mesoporous silica particles have a diameter size ranging between 10 nm and 250 nm as determined by transmission electron microscopy.

7. The rubber composition according to at least one of the previous claims, wherein the pores of the mesoporous silica particles have a diameter ranging between 5 nm and below 30 nm as determined by transmission electron microscopy.

8. The rubber composition of at least one of the previous claims, wherein said rubber is or comprises styrene-butadiene rubber and/or wherein said rubber comprises at least one polybutadiene rubber, and, optionally, wherein the content of said at least one polybutadiene rubber, if present, is ranging between 5 phr and 40 phr.

9. The rubber composition of claim 8, wherein said styrene-butadiene rubber has a glass transition temperature ranging between -50°C and -85°C as determined by differential scanning calorimeter and wherein the rubber composition further comprises from 15 phr to 40 phr of at least one hydrocarbon resin, from 5 phr to 25 phr of one or more process oils, and wherein the sum of the amount of said at least one hydrocarbon resin and the amount of the one or more process oils is ranging between 35 phr and 50 phr.

10. A rubber composition according to any one of claims 1 to 9, **characterized in that** it further comprises one or more hydrocarbon resins, and **in that** said rubber composition comprises a total amount of silica ranging between 40 phr and 250 phr.

11. The rubber composition according to any one of claims 1 to 10, **characterized in that** said rubber is or comprises one or more selected of styrene-butadiene rubber, neodymium polybutadiene rubber, polybutadiene rubber, cis-polybutadiene rubber, polyisoprene rubber, styrene-isoprene rubber, styrene-isoprene-butadiene rubber, ethylene propylene rubber, ethylene propylene diene monomer/butyl rubber, copolymers or blends of any of previously-mentioned rubber.

12. The rubber composition according to any one of claims 1 to 11, **characterized in that** the mesoporous silica particles of the reinforcement material are a first type of silica, and wherein the reinforcement material further comprises a second type of silica having a specific surface area ranging between 150 m²/g and 250 m²/g as determined by BET experiments under ASTM D1993.

13. The rubber composition according to any one of claims 1 to 12, **characterized in that** said first type of functional group is one or more alkyl chains and wherein said second type of functional group comprises at least one sulphur atom; and/or wherein said rubber composition is sulphur cured.

14. The rubber composition of at least one of the previous claims, wherein:
said rubber composition further comprises one or more process oils, and wherein the phr ratio between the reinforcement material and the one or more process oils is ranging between 3.5:1 and 8:1; and/or wherein the weight average molecular weight of said at least rubber is ranging between 400,000 g/mol and 1,000,000 g/mol determined by GPC according to ASTM D5296-11;
with preference,
(i) said rubber composition further comprises from 15 phr to 40 phr of at least one hydrocarbon resin having a glass transition temperature ranging between 30°C and 100°C.

15. Tire with a tire tread, wherein the tire tread comprises a rubber composition in accordance with at least one of the previous claims.
